# EUROPÄISCHE PATENTSCHRIFT

(11) **EP 4 182 836 B1**
(45) Veröffentlichungstag und Bekanntmachung des Hinweises auf die Patenterteilung: **01.07.2026**
(21) Anmeldenummer: 21745913.0
(22) Anmeldetag: 15.07.2021
(51) Int. Cl.: G07D 7/202, G07D 7/20, G06F 18/214, G06V 10/25, G06V 10/26, G06V 10/44, G06V 30/414, G06F 18/28

(54) **VERFAHREN UND VORRICHTUNG ZUM PRÜFEN VON WERTDOKUMENTEN UND VERFAHREN UND VORRICHTUNG ZUM ERZEUGEN VON PRÜFPARAMETERN ZUR VERWENDUNG BEI EINEM VERFAHREN ZUM PRÜFEN VON WERTDOKUMENTEN**
METHOD AND DEVICE FOR CHECKING VALUE DOCUMENTS, AND METHOD AND DEVICE FOR GENERATING CHECKING PARAMETERS FOR USE IN A METHOD FOR CHECKING VALUE DOCUMENTS
PROCÉDÉ ET DISPOSITIF DE VÉRIFICATION DE DOCUMENTS DE VALEUR, ET PROCÉDÉ ET DISPOSITIF DE GÉNÉRATION DE PARAMÈTRES DE CONTRÔLE DESTINÉS À ÊTRE UTILISÉS DANS UN PROCÉDÉ DE CONTRÔLE DE DOCUMENTS DE VALEUR

(30) Priorität: 16.07.2020 DE 102020004284
(43) Veröffentlichungstag der Anmeldung: 24.05.2023
(73) Patentinhaber: Giesecke+Devrient Currency Technology GmbH, 81677 München (DE)
(72) Erfinder: KODEWITZ, Marja, 81927 München (DE)
(74) Vertreter: Giesecke+Devrient IP
(86) Internationale Anmeldenummer: PCT/EP2021/025263
(87) Internationale Veröffentlichungsnummer: WO 2022/012778

(56) Entgegenhaltungen:
- CN-A- 104 464 079
- US-A1- 2007 165 936

## Beschreibung

Die Erfindung betrifft ein Verfahren und eine Vorrichtung zum Prüfen von Wertdokumenten und ein Verfahren und eine Vorrichtung zum Erzeugen von Prüfparametern zur Verwendung bei dem Verfahren zum Prüfen von Wertdokumenten.

Unter Wertdokumenten werden dabei blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale auf, deren Vorhandsein ein Indiz für die Echtheit, d.h. die Herstellung durch eine dazu befugten Stelle, ist. Wertdokumente können unterschiedliche Wertdokumenttypen haben. Wichtige Beispiele für solche Wertdokumenttypen sind Coupons, Gutscheine, Schecks und insbesondere Banknoten. Im Fall von Banknoten können Wertdokumenttypen weiter unterschieden werden; im Rahmen der vorliegenden Erfindung kann ein Wertdokumenttyp gegeben sein durch die Währung und den Nennwert einer Banknote bzw. die Denomination sowie gegebenenfalls die Emission bzw. den Zeitraum, in dem diese offiziell, beispielsweise von Zentralbanken, ausgegeben wurden. Soweit sich die folgenden Erläuterungen auf Banknoten beziehen, gelten diese für jeden anderen Typ von Wertdokumenten entsprechend.

Banknoten werden häufig durch Bedrucken eines Substrats in mehreren Schritten bzw. Herstellungsschritten hergestellt, wobei in jedem der Schritte eine Druckschicht auf das Banknotensubstrat aufgebracht wird. Die aufgebrachten Druckschichten sollten vorgegebene Lagen relativ zum Banknotensubstrat und/oder zueinander aufweisen, doch ist dies meist nur näherungsweise der Fall, da die Druckschichten herstellungsbedingt relativ zueinander verschoben sein können. Als Konsequenz entstehen Variationen im Erscheinungsbild der Banknoten.

Beim Prüfen eines Wertdokuments eines vorgegebenen Wertdokumenttyps, etwa beim Prüfen der Echtheit oder des Zustands, insbesondere einer Zustandsverschlechterung durch Verschmutzungen oder Abträge von Druckfarbe, wird häufig von dem zu prüfenden Wertdokument ein digitales Bild erfasst und zum Prüfen verwendet. Unter einem digitalen Bild wird im Rahmen der vorliegenden Offenbarung ein Bild verstanden, das Pixel und den Pixeln jeweils zugeordnete Pixeldaten umfasst. Jedem Pixel entspricht dabei ein entsprechender Ort in dem Bild, für den die Pixeldaten gelten. Orte in dem Bild entsprechen Orten auf dem Wertdokument. Die Pixeldaten können beispielsweise Helligkeiten oder Farbwerte der jeweiligen Pixel darstellen. Beim Prüfen wird, abhängig von dem verwendeten Verfahren, geprüft, ob oder inwieweit das digitale Bild wenigstens ein vorgegebenes Prüfkriterium erfüllt.

Beim Prüfen des Kriteriums werden Prüfparameter verwendet, die vorgegebene Eigenschaften von Wertdokumenten des vorgegebenen Wertdokumenttyps bestimmen. Bei manchen Prüfverfahren kann beim Prüfen des Kriteriums beispielsweise geprüft werden, ob Pixel oder Pixelgruppen durch die Prüfparameter festgelegte Eigenschaften aufweisen. Die Prüfparameter können dann beispielsweise ein Template für Wertdokumente des vorgegebenen Wertdokumenttyps umfassen. Unter einem Template werden im Rahmen der vorliegenden Anmeldung Daten verstanden, die Pixel wenigstens eines Abschnitts eines digitalen Bildes eines Wertdokuments des vorgegebenen Wertdokumenttyps und den Pixeln jeweils zugeordnete Template-Pixeldaten enthalten. Jedem Pixel entspricht dabei ein entsprechender Ort in dem Bild, für den die Pixeldaten gelten. Die Auflösung, das heißt die Anzahl der Pixel bezogen auf die Fläche, und deren Anordnung zueinander entspricht dabei vorzugsweise der des digitalen Bildes des zu prüfenden Wertdokuments des vorgegebenen Wertdokumenttyps. Die Template-Pixeldaten können dabei je nach Art des Templates wenigstens einen einzelnen Wert und/oder auch einen Bereich für als zulässig anzusehende Werte für die Pixeldaten eines zu prüfenden Wertdokumentbildes umfassen.

So kann bei einer Prüfung auf eine Zustandsverschlechterung wie eine Verschmutzung oder einen Abtrag von Druckfarbe, als Prüfkriterium geprüft werden, ob die Pixeldaten bzw. -werte für Pixel eines Bildes eines Wertdokuments innerhalb eines vorgegebenen Intervalls für zulässige Werte liegen. Liegt ein Wert unterhalb des Intervalls, kann auf eine Verschmutzung geschlossen werden, liegt er oberhalb des Intervalls kann auf einen Abtrag von Druckfarbe geschlossen werden. Ansonsten wird angenommen, dass für das Pixel keine Verschlechterung vorliegt.

Solche Templates sind jeweils für einen Wertdokumenttyp, im Fall von Banknoten beispielsweise gegeben durch die Währung und den Wert bzw. die Denomination und gegebenenfalls die Emission, erstellt.

Beispielsweise werden häufig Templates erstellt, indem eine Mittelwertbildung über eine große Zahl von Bildern von Trainingswertdokumenten des vorgegebenen Wertdokumenttyps durchgeführt wird, so dass als Template-Pixeldaten für ein Pixel ein Mittelwert über die entsprechenden Pixeldaten der Trainingswertdokumente verwendet werden. Bei anderen Templates können für Pixel als Template-Pixeldaten Unter- und Obergrenzen für die Intensität festgelegt werden, die durch die minimalen und maximalen Intensitätswerte für das jeweilige Pixel über die Menge der Trainingswertdokumente gegeben sein können.

Für beliebige Wertdokumente desselben Wertdokumenttyps wird daher dasselbe Template verwendet. Allerdings führen Variationen in der Lage der Druckschichten zu ungenauen Templates, insbesondere in dem Fall, dass Intervallgrenzen verwendet werden.

Beim Prüfen von Wertdokumenten des vorgegebenen Wertdokumenttyps führen die oben geschilderten Variationen in der Lage der Druckschichten dazu, dass diese Verfahren weniger genau arbeiten können, da die Templates nicht sehr genau sind und/oder Toleranzen zum Ausgleich der noch zulässigen Verschiebung der Druckschichten zueinander und damit der mit der Variation der Verschiebungen einhergehenden Variationen der Pixeldaten zugelassen werden müssen.

Ähnliche Probleme können auftreten, wenn beispielsweise herstellungsbedingte Schwankungen in der relativen Lage anderer Herstellungselemente, die wenigstens teilweise das Erscheinungsbild eines Wertdokuments bestimmen, auftreten. Unter Herstellungselementen (bzw. Herstellelementen) werden im Rahmen der vorliegenden Anmeldung Elemente eines Wertdokuments verstanden, die wenigstens teilweise das Erscheinungsbild des Wertdokuments im sichtbaren oder nicht sichtbaren (z.B. IR und/ oder UV) Spektralbereich bestimmen und/oder beeinflussen, insbesondere Druckschichten, und unabhängig und/ oder in getrennten Herstellungsschritten von anderen Elementen, insbesondere Herstellungselementen hergestellt oder aufgebracht werden. Beispiele für Herstellungselemente sind mittels Tiefdruck oder Offsetdruck auf ein Wertdokumentsubstrat aufgebrachte Druckschichten, mittels Siebdruck auf das Substrat aufgebrachte Elemente, wie z.B. Bilder oder Zeichen mit vom Betrachtungswinkel abhängiger Farbe, oder optisch erfassbare Sicherheitselemente, wie etwa in das Substrat eingebrachte Wasserzeichen oder eingebettete Sicherheitsfäden oder auf das Substrat, z.B. mittels Heißprägeverfahren, aufgebrachte Folien, gegebenenfalls mit Hologrammen. Der einfacheren Lesbarkeit halber können sich die folgenden Erläuterungen teilweise auf Druckschichten beziehen. Sie gelten aber für jede Art von Herstellungselementen, insbesondere für die vorstehend beschriebenen Beispiele von Herstellungselementen, entsprechend.

CN 104 464 079 A offenbart ein Verfahren zur Erkennung mehrerer Währungstypen und Nennwerte auf der Grundlage von Mustermerkmalspunkten und topologischen Strukturen von Mustermerkmalspunkten. Das Verfahren zur Erkennung mehrerer Währungsarten und Nennwerte umfasst die Schritte:
1. Die zu erkennenden Merkmalspunkte von Banknotenbildern werden extrahiert und die Positionen und Merkmalsbeschreibungen der Merkmalspunkte werden aufgezeichnet.
2. Ein erster Vergleichsabgleich wird an den Merkmalspunkten der zu erkennenden Banknotenbilder bzw. den Referenzpunkten der Vorlagen durchgeführt, wobei die Merkmalspunkte, deren Abgleichsergebnisse mit den Referenzpunkten einer oder mehrerer Vorlagen die ersten Abgleichsbedingungen erfüllen, als Referenz ausgewählt werden Punkte der zu erkennenden Banknotenbilder.
3. Die Referenzpunkte der zu erkennenden Banknotenbilder werden als Referenz verwendet, um topologische Strukturinformationen anderer Merkmalspunkte zu generieren.
4. Es wird ein zweiter Vergleichsabgleich mit den Merkmalsbeschreibungen der anderen Merkmalspunkte der zu erkennenden Banknotenbilder und den topologischen Strukturinformationen anderer Merkmalspunkte sowie den Merkmalsbeschreibungen und topologischen Strukturinformationen der Merkmalspunkte eines oder mehrerer Merkmalspunkte durchgeführt.
5. Durch die Vorlagen dargestellte Währungsarten und Nennwerte werden als Nennwerterkennungsergebnisse der zu erkennenden Banknotenbilder ausgewählt, wobei die Vergleichsergebnisse der zu erkennenden Banknotenbilder und der Vorlagen Unterscheidungsbedingungen erfüllen.

Der Erfindung liegt die Aufgabe zugrunde, Verfahren zum Prüfen von Wertdokumenten eines vorgegebenen Wertdokumenttyps, die wenigstens zwei Herstellungselemente aufweisen, und ein Verfahren zur Bereitstellung von Prüfparametern für das Prüfverfahren anzugeben, die eine einfache, genaue Prüfung von solchen Wertdokumenten erlauben. Weiter liegt der Erfindung die Aufgabe zugrunde, Mittel zur Durchführung der Verfahren anzugeben.

Die Aufgabe wird gelöst durch ein Verfahren zum Prüfen von Wertdokumenten und ein Verfahren zum Erzeugen von Elementtemplates zur Verwendung bei Prüfen von Wertdokumenten jeweils mit den Merkmalen der entsprechenden unabhängigen Verfahrensansprüche sowie eine Vorrichtung zum Prüfen von Wertdokumenten und eine Vorrichtung zum Erzeugen von Elementtemplates zur Verwendung beim Prüfung von Wertdokumenten jeweils mit den Merkmalen der entsprechenden Vorrichtungsansprüche.

Insbesondere wird die Aufgabe gelöst durch ein Verfahren zum Prüfen von Wertdokumenten eines vorgegebenen Wertdokumenttyps, welche jeweils wenigstens zwei vorgegebene Herstellungselemente, insbesondere Druckschichten und/ oder Sicherheitselemente aufweisen, unter Verwendung von Elementtemplates für die Herstellungselemente, das folgende Schritte umfasst: Bereitstellen eines digitalen Wertdokumentbildes eines zu prüfenden Wertdokuments des vorgegebenen Wertdokumenttyps, das Pixel umfasst, denen jeweils Pixeldaten zugeordnet sind; für das bereitgestellte Wertdokumentbild Ermitteln einer Lage der Herstellungselemente; Ermitteln eines Templates für das digitale Wertdokumentbild unter Verwendung der Elementtemplates für die Herstellungselemente und der ermittelten Lagen der Herstellungselemente; und Prüfen des digitalen Wertdokumentbildes unter Verwendung des ermittelten Templates. In Abhängigkeit von dem Ergebnis des Prüfens kann ein Signal erzeugt werden, das das Ergebnis des Prüfens wiedergibt. Das Verfahren wird im Folgenden auch nur kurz als Prüfverfahren bezeichnet.

Das Prüfverfahren kann computergestützt durchgeführt werden. Die bei dem Prüferfahren verwendeten Elementtemplates sind vorzugsweise vorher bereitgestellt worden, beispielsweise in einem Speicher einer Datenverarbeitungsvorrichtung bzw. eines Computers gespeichert, mittels derer bzw. dem das Prüfverfahren durchgeführt wird.

Gegenstand der Erfindung ist auch eine Vorrichtung zum Prüfen von Wertdokumenten eines vorgegebenen Wertdokumenttyps, insbesondere Banknoten, welche jeweils wenigstens zwei vorgegebene Herstellungselemente, insbesondere Druckschichten und/oder Sicherheitselemente, aufweisen, unter Verwendung von Elementtemplates für die Herstellungselemente mit einer Auswertungseinrichtung, welche wenigstens einen Speicher, in dem die Elementtemplates gespeichert sind und eine Schnittstelle zum Bereitstellen eines digitalen Wertdokumentbildes aufweist, wobei die Auswertungseinrichtung dazu eingerichtet ist, ein erfindungsgemäßes Prüfverfahren unter Verwendung der gespeicherten Elementtemplates und des digitalen Wertdokuments durchzuführen. Diese Vorrichtung wird im Folgenden auch als Prüfvorrichtung bezeichnet.

Die Auswertungseinrichtung kann dazu vorzugsweise einen Prozessor, der mit dem Speicher über eine Datenverbindung verbunden ist, und einen mit dem Prozessor über eine Datenverbindung verbundenen Programmspeicher aufweisen, wobei in dem Programmspeicher Instruktionen eines Programms gespeichert ist, bei dessen Ausführung der wenigstens eine Prozessor das erfindungsgemäße Prüfverfahren unter Verwendung der in dem Speicher gespeicherten Elementtemplates und des digitalen Wertdokumentbildes ausführt. Unter einem Prozessor wird im Rahmen der vorliegenden Erfindung nicht nur ein einzelner Prozessor mit einem oder mehreren Kernen verstanden, sondern auch ein System von gekoppelten Prozessoren. Der Speicher, die Schnittstelle und der Prozessor können dabei Teile einer Datenverarbeitungseinrichtung der Auswertungseinrichtung bilden.

Gegenstand der Erfindung ist daher auch ein Computerprogramm zur Ausführung mittels einer Datenverarbeitungseinrichtung mit einem Prozessor, das Programmcode enthält, bei dessen Ausführung der Prozessor das erfindungsgemäße Prüfverfahren durchführt.

Gegenstand der Erfindung ist auch ein computerlesbarer Datenträger auf dem ein erfindungsgemäßes Computerprogramm gespeichert ist und insbesondere ein Computerprogramm zur Ausführung mittels einer Datenverarbeitungseinrichtung mit einem Prozessor, das Programmcode enthält, bei dessen Ausführung der Prozessor das erfindungsgemäße Prüfverfahren durchführt.

Bei dem Prüfverfahren kann beim Bereitstellen des Wertdokumentbildes mittels einer Bilderfassungseinrichtung ein digitales Wertdokumentbild eines zu prüfenden Wertdokuments erfasst und in einer Speichereinrichtung bzw. einem Speicher gespeichert werden. Die Prüfvorrichtung kann dazu weiter eine Bilderfassungseinrichtung zum Erfassen eines digitalen Wertdokumentbildes eines zu prüfenden Wertdokuments aufweisen, die mit der Schnittstelle zum Bereitstellen eines digitalen Wertdokuments über eine Signalverbindung verbunden ist.

Das Prüfverfahren erlaubt es insbesondere, die Prüfung einzelner Wertdokumente bei deren Bearbeitung in Echtzeit durchzuführen.

Gegenstand der vorliegenden Erfindung ist daher auch ein Verfahren zum Bearbeiten, insbesondere Prüfen und/oder Zählen und/oder Sortieren und/oder Vernichten, von Wertdokumenten eines vorgegebenen Wertdokumenttyps, welche jeweils zwei vorgegebene Herstellungselemente, insbesondere Druckschichten und/ oder Sicherheitselemente, aufweisen, bei denen Wertdokumente einzeln an einer Bilderfassungseinrichtung zur Erfassung eines digitalen Wertdokumentbildes vorbeitransportiert werden, während des Vorbeitransports eines jeweiligen Wertdokuments ein digitales Wertdokumentbild erfasst, und danach, vorzugsweise in Echtzeit, mit einem erfindungsgemäßen Prüfverfahren geprüft wird. Je nach Ergebnis des Prüfens kann das Wertdokument sortiert und/oder vernichtet werden.

Gegenstand der vorliegenden Erfindung ist daher auch eine Vorrichtung zum Bearbeiten, insbesondere Prüfen und/oder Zählen und/oder Sortieren und/oder Vernichten, von Wertdokumenten eines vorgegebenen Wertdokumenttyps insbesondere Banknoten, welche jeweils wenigstens zwei vorgegebene Herstellungselemente, insbesondere Druckschichten und/oder Sicherheitselemente, aufweisen, mit einer Zuführeinrichtung zur Zuführung von einzelnen oder vereinzelten zu bearbeitenden Wertdokumenten, einer Ausgabeeinrichtung mit wenigstens einem Ausgabeabschnitt zur Aufnahme bearbeiteter Wertdokumente, einer Transporteinrichtung zum Transportieren von einzelnen oder vereinzelten Wertdokumenten von der Zuführeinrichtung zu der Ausgabeeinrichtung, und einer erfindungsgemäßen Prüfvorrichtung, wobei die Bilderfassungseinrichtung der Prüfvorrichtung an dem Transportpfad angeordnet und so eingerichtet sein, dass digitale Wertdokumentbilder von an der Bilderfassungseinrichtung vorbeitransportierten, zu prüfenden Wertdokumenten während des Vorbeitransports erfasst und für die Verwendung in der Prüfvorrichtung bereitgestellt werden. Vorzugsweise kann die Vorrichtung zur Prüfung der transportierten Wertdokumente in Echtzeit ausgebildet sein.

Die Aufgabe wird weiter gelöst durch ein Verfahren zum Erzeugen von Elementtemplates zum Bilden von Templates beim Prüfen von Wertdokumenten eines vorgegebenen Wertdokumenttyps, wobei Wertdokumente des vorgegebenen Wertdokumenttyps wenigstens zwei vorgegebene Herstellungselemente, insbesondere Druckschichten und/ oder Sicherheitselemente, aufweisen, wobei bei dem Verfahren digitale Trainingsbilder von Trainings-wertdokumenten des vorgegebenen Wertdokumenttyps und ein digitales Referenzbild eines Referenzwertdokuments des vorgegebenen Wertdokumenttyps, welche jeweils Pixel aufweisen, denen jeweils Pixeldaten zugeordnet sind, verwendet werden, mit folgenden Schritten: für die Trainingsbilder jeweils Ermitteln einer Lage der Herstellungselemente, und Zuordnen von Pixeln des jeweiligen Trainingsbildes zu den Herstellungselementen unter Verwendung des Referenzbildes und unter Berücksichtigung der jeweils ermittelten Lagen der Herstellungselemente. Das Verfahren umfasst weiter für jedes der Herstellungselemente ein Erzeugen eines ersten Elementtemplates, das diejenigen Pixel enthält, die bei allen Trainingsbildern dem jeweiligen Herstellungselement zugeordnet wurden. Weiter umfasst es ein Erzeugen eines zweiten Elementtemplates, das diejenigen Pixel enthält, die bei einem oder mehreren der Trainingsbilder dem jeweiligen Herstellungselement zugeordnet wurden. Die Elementtemplates können dann, vorzugsweise in einem Speicher bzw. computerlesbaren Speichermedium, gespeichert werden. Dieses Verfahren wird im Folgenden der Einfachheit halber auch als Adaptionsverfahren bezeichnet. Bei den Wertdokumenten kann es sich vorzugsweise um Banknoten handeln. Vorzugsweise werden die zugehörigen Elementtemplate-Pixeldaten für ein Pixel aus den Pixeldaten des jeweiligen Pixels für wenigstens einen Teil der Trainings-Wertdokumente bzw. Trainingsbilder ermittelt.

Die digitalen Trainingsbilder von Trainingswertdokumenten des vorgegebenen Wertdokumenttyps und das digitale Referenzbild eines Referenzwertdokuments des vorgegebenen Wertdokumenttyps können zuvor, beispielsweise in einem Speicher, bereitgestellt worden sein.

Das Adaptionsverfahren kann vorzugsweise computergestützt durchgeführt werden.

Gegenstand der Erfindung ist weiter eine Vorrichtung zum Erzeugen von Elementtemplates zum Bilden von Templates beim Prüfen von Wertdokumenten eines vorgegebenen Wertdokumenttyps, wobei Wertdokumente des vorgegebenen Wertdokumenttyps wenigstens zwei vorgegebene Herstellungselemente, insbesondere Druckschichten und/oder Sicherheitselemente, die sich gegebenenfalls teilweise überlappen, aufweisen, mit einer Speichereinrichtung zum Speichern von digitalen Trainingsbildern des vorgegebenen Wertdokumenttyps, eines Referenzbildes eines Referenzwertdokuments des vorgegebenen Wertdokumenttyps und vorzugsweise erzeugten Elementtemplates, wobei die Vorrichtung dazu ausgebildet ist, ein erfindungsgemäßes Adaptionsverfahren unter Verwendung der Trainingsbilder und des Referenzbildes durchzuführen und vorzugsweise die erzeugten Elementtemplates in der Speichereinrichtung zu speichern. Diese Vorrichtung wird im Folgenden auch als Adaptionsvorrichtung bezeichnet.

Die Adaptionsvorrichtung kann dazu insbesondere wenigstens eine Prozessor, der mit der Speichereinrichtung über einen Datenverbindung verbunden ist, und einen mit dem Prozessor über eine Datenverbindung verbundenen Programmspeicher aufweisen, wobei in dem Programmspeicher Programmcode gespeichert ist, bei dessen Ausführung der Prozessor das erfindungsgemäße Adaptionsverfahren unter Verwendung der in der Speichereinrichtung gespeicherten Trainingsbilder ausgeführt. Der Prozessor, der Programmspeicher und die Speichereinrichtung können Teile einer Datenverarbeitungseinrichtung der Adaptionseinrichtung sein.

Gegenstand der Erfindung ist daher auch ein Computerprogramm zur Ausführung mittels einer Datenverarbeitungseinrichtung mit einem Prozessor, das Programmcode enthält, bei dessen Ausführung der Prozessor das erfindungsgemäße Adaptionsverfahren durchführt.

Gegenstand der Erfindung ist auch ein computerlesbarer Datenträger auf dem ein erfindungsgemäßes Computerprogramm gespeichert ist und insbesondere Computerprogramm zur Ausführung mittels einer Datenverarbeitungseinrichtung mit einem Prozessor, das Programmcode enthält, bei dessen Ausführung der Prozessor das erfindungsgemäße Adaptionsverfahren durchführt.

Bei dem Adaptionsverfahren brauchen nur Bilder von Wertdokumenten des vorgegebenen Wertdokumenttyps verwendet zu werden. Vorzugsweise können dabei die Trainings-Wertdokumente und das Referenz-Wertdokument fertige und/oder druckfrische Wertdokumente des vorgegebenen Wertdokumenttyps, insbesondere gleicher Währung und/oder Denomination, umfassen oder vorzugsweise sein. Auf diese Weise können geeignete Elementtemplates für die Herstellungselemente und aus diesen Templates unter Verwendung von fertigen Banknoten ermittelt werden, ohne dass etwa erst separate Drucke der jeweiligen Druckschichten zur Verfügung gestellt werden müssten. Weiter werden Schwierigkeiten vermieden, die dadurch auftreten können, dass sich diese Druckschichten bei einem fertiggestellten Wertdokumente teilweise überlappen, bei den separaten Drucken aber nicht. Insgesamt wird dadurch eine einfachere und zuverlässige Erzeugung von Templates ermöglicht. Die verwendeten Bilder zeigen vorzugsweise vollständige Wertdokumente, d. h. insbesondere von nicht beschädigten oder unvollständigen Wertdokumenten.

Bei dem Prüfverfahren können mittels anderer Verfahren erzeugte bzw. bereitgestellte Elementtemplates verwendet werden, die zur Prüfung von Wertdokumenten des vorgegebenen Wertdokumenttyps geeignet sind. Vorzugsweise werden aber mit einem erfindungsgemäßen Adaptionsverfahren erzeugte Elementtemplates verwendet.

Soweit Schritte der erfindungsgemäßen Verfahren nicht Ergebnisse von anderen Schritten verwenden, können diese ganz oder teilweise parallel oder verschachtelt oder in beliebiger Reihenfolge ausgeführt werden.

Die Verfahren verwenden digitale Bilder von Wertdokumenten eines vorgegebenen Wertdokumenttyps. Diese Bilder weisen vorzugsweise gleiche Auflösungen und damit gleiche Pixelanzahlen für eine vorgegebenen abgebildete Fläche auf. Vorzugsweis zeigen sie gleiche Abschnitte des jeweiligen Wertdokuments, besonders bevorzugt, das ganze Wertdokument, ganz besonders bevorzugt nur das gesamte Wertdokument. Die Pixel können dabei durch deren Position in dem Bild bzw. entsprechende Positionsdaten oder durch die Art und/oder Reihenfolge im Speicher identifiziert sein. Die Pixeldaten können Daten umfassen, die im Fall von Bildern Helligkeitswerte und/oder Farbwerte und/oder Intensitätswerte in vorgegebenen Wellenlängenbereichen, beispielsweise im Infrarot, wiedergeben.

Wertdokumente des vorgegebenen Wertdokumenttyps weisen die wenigstens zwei vorgegebenen Herstellungselemente auf, die wenigstens teilweise sichtbar und damit in den Bildern abgebildet sind. Die Herstellungselemente können sich gegebenenfalls teilweise überlappen. Die Wertdokumente können noch weitere Herstellungselemente aufweisen, die jedoch bei den erfindungsgemäßen Verfahren nicht explizit berücksichtigt werden.

Bei den Verfahren werden Elementtemplates für die Herstellungselemente erzeugt bzw. verwendet, die jeweils den Herstellungselementen entsprechen. Elementtemplates im Sinne der vorliegenden Offenbarung enthalten, wie Templates, Pixel und den Pixeln jeweils zugeordnete Elementtemplate-Pixeldaten. In Bezug auf die Pixel gelten die Erläuterungen zu Templates entsprechend. Die Elementtemplate-Pixeldaten können, analog zu Templates, je nach Art des Elementtemplates wenigstens einen einzelnen Wert und/oder auch Daten, die einen Bereich für als zulässig anzusehende Werte für die Pixeldaten eines Pixels des Elementtemplates definieren, umfassen. Ein Elementtemplate für ein Herstellungselement kann aber vorzugsweise weniger Pixel enthalten, als ein digitales Bild eines ganzen Wertdokuments, da es nur dem Herstellungselement zu entsprechen braucht, das sich nicht über die gesamte Fläche eines Wertdokument zu erstrecken braucht.

Die Elementtemplates und das in Abhängigkeit von diesen zu erzeugenden Template müssen für das Prüfverfahren für ein individuelles Wertdokument, das das Template verwendet, geeignet sein.

Die Elementtemplates sind jeweils den Herstellungselementen zugeordnet. In Abhängigkeit von der bei dem Prüfverfahren für ein aktuell zu prüfendes Wertdokument ermittelten Lage der Herstellungselemente auf diesem kann in Abhängigkeit von den Elementtemplates für das zu prüfende Wertdokument ein individuelles Template erzeugt werden, das beim weiteren Prüfen verwendet wird. Das Template kann daher insbesondere erst während des Prüfungsverfahrens in Echtzeit und damit sozusagen "dynamisch" ermittelt werden. Damit können die Ungenauigkeiten, die durch Schwankungen in der Lage der Herstellungselemente bedingt sind, stark reduziert oder beseitigt werden. Weiter können beim Vergleichen des Wertdokumentbildes mit dem individuellen Template an sich bekannte Verfahren verwendet werden, die ein Template verwenden, wobei zulässige Toleranzen aber reduziert werden können oder sind. Dies ist jedoch nicht notwendig.

Bei dem Adaptionsverfahren werden für die Herstellungselemente jeweils zwei Elementtemplates erzeugt. Die Elementtemplates für ein Herstellungselement werden allerdings vorzugsweise nur erzeugt, wenn überhaupt entsprechende Pixel ermittelt wurden.

Das erste Elementtemplate für ein jeweiliges der Herstellungselemente enthält diejenigen Pixel, die für alle Trainingsbilder dem Herstellungselement zugordnet werden konnten. Vorzugweise enthält es nur diese Pixel. Es kann daher davon ausgegangen werden, dass diese immer wenigstens einem Abschnitt des jeweiligen Herstellungselements entsprechen und immer in den entsprechenden Bildbereichen weitgehend oder vollständig das Erscheinungsbild bestimmen. Sie können daher auch als "dominant" bezeichnet werden. Verschiedene erste Elementtemplates enthalten daher keine gleichen Pixel. Insofern können die Pixel eines jeweiligen ersten Elementtemplates einer Maske entsprechen, mittels derer Pixel identifiziert werden können, die dem Herstellungselement entsprechen. Die Masken überlappen dann nicht.

Das zweite Elementtemplate enthält diejenigen Pixel, denen jeweils in wenigstens einem der Trainingsbilder das jeweilige Herstellungselement zugeordnet wurde. Daher bilden die Pixel des ersten Elementtemplates für ein Herstellungselement vorzugsweise eine Teilmenge der Pixel des zweiten Elementtemplates für das gleiche Herstellungselement. Es kann aber der Fall auftreten, dass ein Pixel in zweiten Elementtemplates für zwei verschiedene Herstellungselemente enthalten ist. In diesen Fällen war unter den Trainingsbildern bzw. Trainingswertdokumenten wenigstens eines, bei dem eines der Herstellungselemente gegenüber demselben Herstellungselement eines anderen der Trainingswertdokumente so versetzt war, dass einmal eine Zuordnung zu dem einen Herstellungselement und beim anderen mal eine Zuordnung zu dem zweiten Herstellungselement erfolgt ist. An diesen Stellen können die Herstellungselemente überlappen. Da ein solches Pixel also nicht nur einem der Herstellungselemente zugeordnet werden kann, muss es bei der Erstellung des Templates unter Verwendung der Elementtemplates anders behandelt werden.

Die Verwendung dieser zwei Elementtemplates für dasselbe Herstellungselement hat den Vorteil, dass beispielsweise im Fall einer Druckschicht, Abschnitte der Druckschicht, die immer von anderen Elementen überdeckt und nicht sichtbar sind, nicht in den Templates vorhanden sind. Abschnitte einer Druckschicht, die nur je nach Lagen der Druckschichten in den Trainingsbildern das Erscheinungsbild beeinflussen, werden in dem zweiten Elementtemplate berücksichtigt, solche die immer in den Trainingsbildern vorhanden sind, in den ersten Elementtemplates. Die Druckschicht, wie sie in einem Schritt der Herstellung aufgebracht wird, braucht nicht nur nicht genau bekannt zu sein, vielmehr werden auch die Anteile, die je nach Beitrag zum Erscheinungsbild in den Trainingswertdokumenten nicht beitragen, in den Elementtemplates nicht berücksichtigt. Selbst von einer vollflächigen Druckschicht, die aber in den Trainingsbildern nur in Teilen zum Erscheinungsbild beiträgt, kann dieser Anteil ermittelt werden. Dies führt zu genaueren Elementtemplates und in der Folge daraus ermittelten individuellen Templates.

Die mit dem Verfahren erzeugten Elementtemplates können vorzugsweise bei dem erfindungsgemäßen Prüfverfahren verwendet werden.

Bei dem Prüfverfahren ist es dann bevorzugt, dass für wenigstens eines der vorgegebenen Herstellungselemente, vorzugsweise für die vorgegebenen Herstellungselemente, ein erstes und ein zweites Elementtemplate verwendet wird, wobei beim Ermitteln des Templates Pixeln, die in den entsprechend den ermittelten Lagen der Herstellungselemente verschobenen ersten Elementtemplates vorhanden sind, Template-Pixeldaten zugeordnet werden, die unter Verwendung von Elementtemplate-Pixeldaten der jeweiligen Pixel in den entsprechend den ermittelten Lagen der Herstellungselemente verschobenen ersten Elementtemplates ermittelt wurden, und für die verbliebenen Pixel, die in wenigstens einem der der entsprechend der ermittelten Lagen der Herstellungselemente verschoben zweiten Elementtemplates vorhanden sind, Template-Pixeldaten unter Verwendung der Element-Pixeldaten jeweils entsprechender Pixel des wenigstens einen der entsprechend der ermittelten Lagen der Herstellungselemente verschoben zweiten Elementtemplates ermittelt werden. Ist ein Pixel in zweiten Elementtemplates für zwei Herstellungselemente vorhanden, werden die Template-Pixeldaten also in Abhängigkeit der Pixeldaten der zweiten Elementtemplates bestimmt. Vorzugsweise enthalten die ersten Elementtemplates für verschiedene Herstellungselemente keine gleichen Pixel, während die zweiten Elementtemplates für verschiedene Herstellungselemente gleiche Pixel enthalten können, denen aber unterschiedliche Elementpixel-Daten zugeordnet sind. Die ersten und zweiten Elementtemplates sind vorzugsweise mit einem erfindungsgemäßen Adaptionsverfahren ermittelte Elementtemplates.

Vorzugsweise werden, wenn ein Pixel in nur einem der verschobenen Elementtemplates vorhanden ist, als Template-Pixeldaten die Elementtemplate-Pixeldaten des jeweiligen Pixels des jeweiligen verschobenen ersten Elementtemplates verwendet. Ist ein Pixel dagegen in mehr als einem der ersten Elementtemplates vorhanden, wird die Template-Pixeldaten unter Verwendung der Elementtemplate-Pixeldaten der verschobenen ersten Elementtemplates ermittelt. Dieses Vorgehen hat wenigstens zwei Vorteile: zum einen können die Pixel, die in den ersten Teiltemplates enthalten sind und deren Eigenschaften daher durch das jeweilige Herstellungselement bestimmt und die "dominant" für das Erscheinungsbild sind, klar identifiziert, und entsprechende, genauere Template-Pixeldaten zugeordnet werden. Dies ermöglicht klare Konturen dieser Bereiche. Da beim Erstellen des individuellen Templates Pixel bzw. Pixeldaten der zweiten Elementtemplates nur Pixeln zugeordnet werden, die nicht in den ersten Elementtemplates vorhanden sind, können die Template-Pixeldaten für diese in Abhängigkeit von den Elementtemplate-Daten der Elementtemplates ermittelt werden. Dies führt ebenfalls zu einer verbesserten Genauigkeit des individuellen Templates.

Die Herstellungselemente brauchen sich, je nach Wertdokumenttyp, allein oder in Kombination nicht über das gesamte Wertdokument zu erstrecken. Bei dem Adaptionsverfahren kann es dann vorkommen, dass Pixel für keines der Trainingsbilder einem der Herstellungselemente zugeordnet werden können. Dann ist es möglich, dass die Elementtemplates auch in Kombination nicht ausreichen, um ein individuelles Template für das gesamte Wertdokument zu erzeugen.

Bei dem Adaptionserfahren ist es daher bevorzugt, dass das Verfahren als weiteren Schritt ein Erzeugen eines Hintergrundtemplates umfasst, welches diejenigen Pixel, die bei keinem der Trainingsbilder einem der Herstellungselemente zugeordnet wurden, und diesen jeweils zugeordnete Hintergrund-template-Pixeldaten enthält, wobei die Hintergrundtemplate-Pixeldaten vorzugsweise aus Pixeldaten, die den jeweiligen Pixeln der Trainingsbilder zugeordnet sind, ermittelt werden. Das Hintergrundtemplate wird für den vorgegebenen Wertdokumenttyp ermittelt und enthält insbesondere Informationen, d.h. Pixel und ggf. den Pixeln zugeordnete Pixeldaten, zu nicht vom optischen Erscheinungsbild der vorhandenen Herstellungselemente, beispielsweise Druckschichten bzw. Sicherheitselemente, bestimmten Flächenbereichen des Wertdokuments, also im Wesentlichen dem Hintergrund. Das Hintergrundtemplate kann wie die Elementtemplates gespeichert werden.

Bei dem Prüfverfahren kann dann vorzugsweise ein Hintergrundtemplate verwendet werden, das Pixel, die in keinem der Elementtemplates für die Herstellungselemente enthalten sind, und diesen jeweils zugeordnete Hintergrundtemplate-Pixeldaten enthält. Beim Ermitteln des Templates für das digitale Wertdokumentbild können dann für die verbliebenen Pixel, denen keine Template-Pixeldaten von Elementtemplates zugeordnet wurden und die in dem Hintergrundtemplate vorhanden sind, jeweils Template-Pixeldaten unter Verwendung der Hintergrundtemplate-Pixeldaten eines jeweils entsprechenden Pixels des Hintergrundtemplates ermittelt werden. Das Hintergrundtemplate kann wie die Elementtemplates gespeichert sein. Vorzugsweise ist das Hintergrund-Template auf die Elementtemplates abgestimmt. besonders bevorzugt mit einem erfindungsgemäßen Adaptionsverfahren erzeugt worden.

Dieses Ausführungsformen haben den Vorteil, dass ein so erzeugtes individuelles Template für ein Wertdokumentbild auch Pixel mit Pixeldaten enthält, die in keinem der ersten und/oder zweiten Elementtemplates enthalten sind. Insbesondere ist es möglich, für ein Wertdokument ein individuelles Template für die ganze Fläche des Wertdokuments zu erzeugen.

Bei beiden Verfahren wird jeweils eine Lage der Herstellungselemente ermittelt. Dazu können beliebige Verfahren verwendet werden. Beispielsweise kann für jedes der Herstellungselemente mindestens ein sogenanntes Ankerelement und ein dessen Position wiedergebender Ankerpunkt vorgegeben werden. Das Ankerelement kann dabei vorzugsweise ein für das Herstellungselement charakteristischer Bildabschnitt sein, beispielsweise ein Zeichen oder ein anderer unterscheidungskräftiger Druckbildausschnitt, der in Bildern von Wertdokumenten des vorgegebenen Wertdokumenttyps, also insbesondere in den Trainingsbildern und dem Referenzbild vorhanden ist. Solche Ankerelemente können automatisch und/oder manuell ausgewählt worden sein. In den Bildern können die Ankerelemente bzw. die Lagen der Ankerpunkte mittels Template Matching oder anderen Korrelationsverfahren ermittelt werden. Um die Lage der Herstellungselemente festlegen zu können, werden für jedes der Herstellungselemente vorzugsweise wenigstens zwei Ankerelemente vorgegeben. Besonders bevorzugt enthalten die ersten Elementtemplates für die Herstellungselemente jeweils die entsprechenden Ankerelemente für diese Herstellungselemente.

Grundsätzlich genügt es, dass beim Ermitteln der Lage der jeweiligen Herstellungselemente in einem jeweiligen der Trainingsbilder und/oder dem Referenzbild die Lagen der Herstellungselemente in den Trainingsbildern bzw. dem Referenzbild in Bezug auf ein Lagebezugssystem ermittelt werden, das besonders bevorzugt durch Elemente des Wertdokuments in dem Bild, beispielsweise durch einen Umriss bzw. Kanten des Wertdokuments in dem jeweiligen Trainingsbild bzw. Referenzbild, oder die Ränder oder einen Rand und einen Eckpunkt des Trainingsbildes bzw. Referenzbildes bestimmt sein kann. Vorzugsweise sind die ermittelten Lagen der Herstellungselemente in den Trainingsbildern Lagen relativ zu den Lagen der entsprechenden Herstellungselemente in dem Referenzbild. Dies erleichtert die spätere Erzeugung eines Templates bei Durchführung eines erfindungsgemäßen Prüfverfahrens. Als Ergebnis können insbesondere Lagedaten erzeugt werden, aus denen die Lage der Herstellungselemente relativ zu einem Lagebezugssystem, beispielsweise dem oben erwähnten, ermittelt werden können. Beispielsweise können sich die Lagen auf eine vorgegebene Ecke des Wertdokuments und eine oder zwei angrenzende Kanten beziehen. Die Elementtemplates können vorzugsweise auch implizit, beispielsweise durch ihre Art der Speicherung, oder explizit Lagedaten enthalten, die die Lage der Herstellungselemente in dem Referenzbild, insbesondere in Bezug auf das Lagebezugssystem, wiedergeben. Dies kann in dem Fall, dass die Elementtemplates nicht alle Pixel eines Bildes eines Wertdokuments umfassen, durch Festlegung eines vorgegebenen Pixels des Elementtemplates geschehen. Es ist aber auch möglich, die Lage eines Ankerpunktes zu verwenden.

Bei dem Prüfverfahren werden bei der Erzeugung des Templates ebenfalls die ermittelten Lagen der Herstellungselemente verwendet. Die Erläuterung zum Ermitteln der Lage bei dem Adaptionsverfahren gelten entsprechend. So wird beim Ermitteln der Lage der jeweiligen Herstellungselemente in einem Wertdokumentbild diese Lage vorzugsweise in Bezug auf ein Lagebezugssystem ermittelt, das dem bei dem Erzeugen der Elementtemplates entspricht. Die Elementtemplates können dann entsprechend einer Differenz der Lage der Herstellungselemente in dem Wertdokumentbild der Lage der Herstellungselemente gemäß den Lagedaten in dem Elementtemplate versetzt bzw. verschoben werden.

Es versteht sich, dass die Ausführungen zur Angabe der Lagen auch für das Hintergrundtemplate gelten, soweit dieses erzeugt bzw. verwendet wird.

Bei dem Adaptionsverfahren wird für jedes Trainingsbild versucht, Pixel einem der Herstellungselemente zuzuordnen. Da deren Lage zwischen verschiedenen Wertdokumente variieren kann, werden beim Zuordnen die für das Trainingsbild ermittelten Lagen der Herstellungselemente berücksichtigt.

Dazu kann bei einer bevorzugten Ausführungsform beim Zuordnen von Pixeln des jeweiligen Trainingsbildes zu den Herstellungselementen für ein jeweiliges Pixel des jeweiligen Trainingsbildes ein Grad einer Übereinstimmung zwischen einer Pixelumgebung des Pixels mit einer Pixelumgebung eines entsprechenden Pixels in dem Referenzbild ermittelt werden, wobei die jeweilige Pixelumgebungen des jeweiligen Pixels in dem Trainingsbild und in dem Referenzbild entsprechend der jeweiligen relativen Lage des jeweiligen Herstellungselements in dem Trainingsbild zu der in dem Referenzbild verschoben bzw. versetzt sind, und das jeweilige Pixel des Trainingsbildes in Abhängigkeit von den ermittelten Übereinstimmungsgraden gemäß einem vorgegebenen Zuordnungskriterium einem der Herstellungselemente zugeordnet wird. Unter eines Pixelumgebung eines Pixels wird im Rahmen der vorliegenden Offenbarung eine Menge von Pixeln verstanden, die das Pixel und Pixel innerhalb eines vorgegebenen Abstands von dem Pixel umfassen. Der Abstand bestimmt die Größe der Pixelumgebung, d. h. die Anzahl der Pixel in der Pixelumgebung.

Das Zuordnungskriterium kann vorzugsweise derart vorgegeben sein, dass eine Zuordnung zu demjenigen der Herstellungselemente erfolgt, für das der Grad der Übereinstimmung am größten ist. Besonders bevorzugt erfolgt eine Zuordnung nur, wenn der Grad der Übereinstimmung für das Herstellungselement mit der größten Übereinstimmung einen vorgegebenen Mindestwert überschreitet. Dieser kann vorzugsweise so vorgegeben sein, dass nur schwache und gegebenenfalls zufällige, nicht signifikante Übereinstimmungen nicht zu einer Zuordnung zu einem Herstellungselement führen. Dies hat den Vorteil, dass die Elementtemplates genauer werden.

Den Pixeln können als Elementtemplate-Pixeldaten zugeordnet werden, die aus Pixeldaten, die den jeweiligen Pixeln der Trainingsbilder zugeordnet sind, ermittelt werden oder den Pixeldaten, die den jeweiligen Pixeln der Trainingsbilder zugeordnet sind, entsprechen. Insbesondere können die Elementtemplate-Pixeldaten beliebige Funktionen der Pixeldaten der dem jeweiligen Herstellungselement zugeordneten Pixeldaten in den Trainingsbildern sein. Beispielsweise kann ein Pixeldatum ein Mittelwert über die genannten Pixeldaten sein oder in einer anderen Ausführungsform können die Pixeldaten als untere und obere Grenze eines Intervalls für zulässige Werte das Minimum bzw. das Maximum der Pixeldaten der genannten Pixel umfassen.

Bei dem Prüfverfahren ist es dann bevorzugt, dass beim Ermitteln des Templates Pixeln des Templates, die in den entsprechend den ermittelten Lagen der Herstellungselemente verschoben bzw. versetzten Elementtemplates vorhanden sind, jeweils Template-Pixeldaten zugeordnet werden, die in Abhängigkeit von Elementtemplate-Pixeldaten von entsprechenden Pixeln von entsprechend den jeweils ermittelten Lagen verschobenen Elementtemplates für die Herstellungselemente ermittelt sind.

Bei einer anderen Ausführungsform des Adaptionsverfahrens können beim Zuordnen der Pixel zwei Zuordnungen erfolgen. Genauer kann beim Zuordnen von Pixeln des jeweiligen Trainingsbildes zu den Herstellungselementen für ein jeweiliges Pixel des jeweiligen Trainingsbildes ein erster Grad einer Übereinstimmung zwischen einer ersten Pixelumgebung des Pixels mit einer ersten Pixelumgebung eines Pixels in dem Referenzbild ermittelt werden, wobei die erste Pixelumgebungen in dem Trainingsbild und in dem Referenzbild entsprechend der jeweiligen relativen Lage des jeweiligen Herstellungselements in dem Trainingsbild zu der in dem Referenzbild versetzt sind; das jeweilige Pixel des Trainingsbildes kann dann bei einer ersten Zuordnung in Abhängigkeit von den ermittelten ersten Übereinstimmungsgraden gemäß einem vorgegebenen ersten Zuordnungskriterium einem der Herstellungselemente zugeordnet werden. Weiter kann für ein jeweiliges Pixel des jeweiligen Trainingsbildes ein zweiter Grad einer Übereinstimmung zwischen einer zweiten Pixelumgebung des Pixels mit einer zweiten Pixelumgebung in dem Referenzbild ermittelt werden, wobei die zweite Pixelumgebungen in dem Trainingsbild und in dem Referenzbild entsprechend der jeweiligen relativen Lage des jeweiligen Herstellungselements in dem Trainingsbild zu der in dem Referenzbild versetzt sind; das jeweilige Pixel des Trainingsbildes kann dann bei einer zweiten Zuordnung in Abhängigkeit von den ermittelten zweiten Übereinstimmungsgraden gemäß einem vorgegebenen zweiten Zuordnungskriterium einem der Herstellungselemente zugeordnet werden. Vorzugsweise umfassen die zweiten Pixelumgebungen jeweils mehr Pixel als die ersten Pixelumgebungen, sind also vorzugsweise größer.

Der Grad der Übereinstimmung kann in beiden Fällen wie zuvor ausgeführt bestimmt werden. Die Zuordnungskriterien können wie oben ausgeführt gewählt sein, wobei aber die Mindestwerte für die beiden Kriterien gleich oder verschieden gewählt sein können.

Sind zwei Zuordnungen erfolgt, kann bei dem Adaptionsverfahren das erste Elementtemplate für die jeweiligen Herstellungselemente nur diejenigen Pixel enthalten, welche bei allen Trainingsbildern dem jeweiligen Herstellungselement bei dem ersten Zuordnen zugeordnet wurden, und das zweite Elementtemplate für die jeweiligen Herstellungselemente kann, vorzugsweise nur, diejenigen Pixel enthalten, welche bei wenigstens einem der Trainingsbilder dem jeweiligen Herstellungselement bei dem zweiten Zuordnen zugeordnet wurden. Diese Ausführungsform hat den Vorteil, dass das erste Elementtemplate möglichst genau diejenigen Pixel enthält, die auf Wertdokumenten des vorgegebenen Wertdokumenttyps immer sichtbar sind.

Dies hat den Vorteil, dass die ersten Elementtemplates ziemlich genau den dominanten, d. h. in allen Trainingsbildern immer sichtbaren, Abschnitten der jeweiligen Herstellungselemente entsprechen. Die zweiten Elementtemplates enthalten aber auch Anteile von Herstellungselementen, die nur bei bestimmten Lagen in den Trainingsbildern erkennbar sind. Für deren Identifizierung ist die Verwendung größerer Pixelumgebungen vorteilhafter, da dann eine Zuordnung häufiger erfolgen kann.

Die Elementtemplates enthalten jeweils nicht nur die Pixel, sondern auch diesen jeweils zugeordnete Elementtemplate-Pixeldaten. Vorzugsweise werden bei dem Adaptionsverfahren beim Erzeugen der Elementtemplates den im ersten Elementtemplate enthaltenen Pixeln erste Elementtemplate-Pixeldaten und den im zweiten Elementtemplate enthaltenen Pixeln zweite Elementtemplate-Pixeldaten zugeordnet, wobei die ersten und/ oder zweiten Elementtemplate-Pixeldaten aus Pixeldaten, die den jeweiligen Pixeln der Trainingsbilder zugeordnet sind, ermittelt werden oder den Pixeldaten, die den jeweiligen Pixeln der Trainingsbilder zugeordnet sind, entsprechen. Insbesondere können die Elementtemplate-Pixeldaten beliebige Funktionen der Pixeldaten der dem jeweiligen Herstellungselement zugeordneten Pixeldaten in den Trainingsbildern sein. Beispielsweise kann ein Pixeldatum ein Mittelwert über die genannten Pixeldaten sein oder in einer anderen Ausführungsform können die Pixeldaten als untere und obere Grenze eines Intervalls für zulässige Werte das Minimum bzw. das Maximum der Pixeldaten der genannten Pixel umfassen. Entsprechendes gilt für die Pixeldaten des Hintergrundtemplates. Dieses Vorgehen hat den Vorteil, dass die Pixeldaten der Elementtemplates aus vielen Trainingswertdokumenten ermittelt werden und damit genauer sind.

Bei dem Prüfverfahren kann dann vorzugsweise für wenigstens eines der Herstellungselemente ein erstes und ein zweites Elementtemplate verwendet werden, wobei beim Ermitteln des Templates Pixeln des Templates, die in den entsprechend den ermittelten Lagen der Herstellungselemente verschoben ersten Elementtemplates vorhanden sind, als Template-Pixeldaten die Elementtemplate-Pixeldaten der entsprechenden den ermittelten Lagen der Herstellungselemente verschobenen ersten Elementtemplates zugeordnet werden, für die verbliebenen Pixel, die in wenigstens einem der entsprechend der ermittelten Lagen der Herstellungselemente verschobenen zweiten Elementtemplates vorhanden sind, Template-Pixeldaten unter Verwendung der Elementtemplate Pixeldaten eines jeweils entsprechenden Pixels des wenigstens einen der entsprechend der ermittelten Lagen der Herstellungselemente verschoben zweiten Elementtemplates ermittelt werden.

Die Erfindung wird im Folgenden noch weiter beispielhaft an Hand der Zeichnungen erläutert. Es zeigen:
- Fig. 1: eine schematische Darstellung einer Wertdokumentbearbeitungsvorrichtung, im Beispiel einer Banknotensortiervorrichtung,
- Fig. 2: eine grob schematische Darstellung einer Vorrichtung zum Erzeugen von Elementtemplates,
- Fig. 3A, B: grob schematische Darstellungen von Wertdokumentbildern von Wertdokumenten, die verschiedenen Lagen von Herstellungselementen aufweisen,
- Fig. 4: ein Beispiel eines von einem Wertdokument eines vorgegebenen Wertdokumenttyps erfassten Bildes,
- Fig. 5: jeweils ein Beispiel einer bei einer kleineren Pixelumgebung (links) und größere Pixelumgebung (rechts) vorgenommenen Zuordnung von Pixeln für ein Wertdokument in Fig. 4,
- Fig. 6: jeweils ein Beispiel eines ersten Elementtemplates für die erste Druckschicht (links) und die zweite Druckschicht (rechts) für Wertdokumente des Wertdokumenttyps wie in Fig. 4,
- Fig. 7: jeweils ein Beispiel eines zweiten Elementtemplates für die erste Druckschicht (links) und die zweite Druckschicht (rechts) für Wertdokumente des Wertdokumenttyps wie in Fig. 4,
- Fig. 8: ein Beispiel eines aus Elementtemplates zusammengesetzten individuellen Templates für ein Wertdokument des Wertdokumenttyps wie in Fig. 4,
- Fig. 9: ein grob schematisches Ablaufdiagramm für ein Beispiel für ein Adaptionsverfahren zum Erzeugen von Elementtemplates,
- Fig. 10: ein grob schematisches Ablaufdiagramm für ein Beispiel für ein Prüfverfahren für Wertdokumente des vorgegebenen Wertdokumenttyps, bei dem Elementtemplates verwendet werden, die mit dem Verfahren nach Fig. 9 erzeugt sind, und
- Fig. 11: ein grob schematisches Ablaufdiagramm für ein weiteres Beispiel für ein Adaptionsverfahren zum Erzeugen von Elementtemplates.

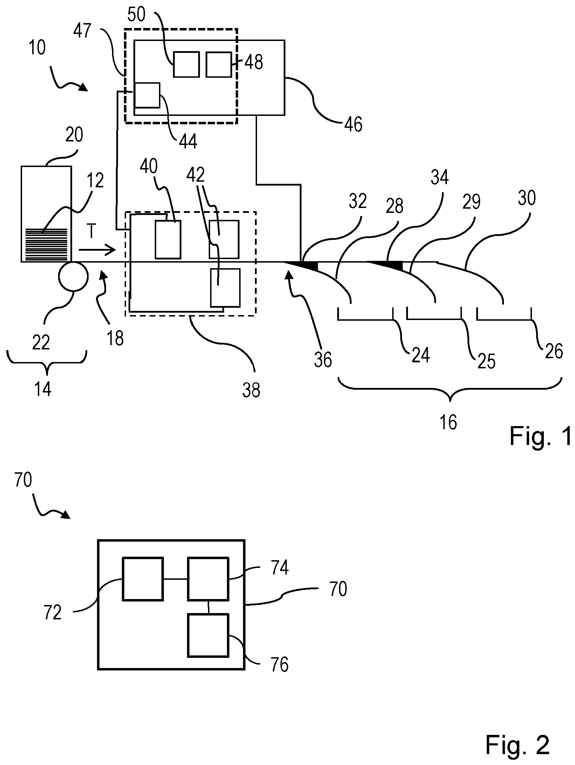

Eine Wertdokumentbearbeitungsvorrichtung 10 in Fig. 1, im Beispiel eine Vorrichtung zur Bearbeitung von Wertdokumenten 12 eines vorgegebenen Wertdokumenttyps in Form von Banknoten, ist zur Sortierung von Wertdokumenten 12 in Abhängigkeit von dem mittels der Wertdokumentbearbeitungsvorrichtung 10 ermittelten Zustand und der mittels der Wertdokumentbearbeitungsvorrichtung 10 geprüften Echtheit von bearbeiteten Wertdokumenten ausgebildet.

Sie verfügt über eine Zuführeinrichtung 14 zum Zuführen von Wertdokumenten 12, eine Ausgabeeinrichtung 16 zur Abgabe bzw. Aufnahme bearbeiteter, d. h. sortierter Wertdokumente, und eine Transporteinrichtung 18 zum Transportieren von vereinzelten Wertdokumenten von der Zuführeinrichtung 14 zu der Ausgabeeinrichtung 16.

Die Zuführeinrichtung 14 umfasst im Beispiel ein Eingabefach 20 für einen Wertdokumentstapel und einen Vereinzler 22 zum Vereinzeln von Wertdokumenten 12 aus dem Wertdokumentstapel in dem Eingabefach 20 und Zuführung vereinzelter Wertdokumente zu der Transporteinrichtung 18.

Die Ausgabeeinrichtung 16 umfasst im Beispiel drei Ausgabeabschnitte 24, 25 und 26, in die bearbeitete Wertdokumente je nach dem Zwischenergebnis der Bearbeitung, im Beispiel Prüfung, sortiert werden können. Im Beispiel umfasst jeder der Abschnitte ein Stapelfach und ein nicht gezeigtes Stapelrad, mittels dessen zugeführte Wertdokumente in dem Stapelfach abgelegt werden können. In anderen Ausführungsbeispielen kann ein Ausgabeabschnitt, durch eine Einrichtung zur Vernichtung von Banknoten ersetzt sein.

Die Transporteinrichtung 18 verfügt über wenigstens zwei, im Beispiel drei Zweige 28, 29 und 30, an deren Enden jeweils einer der Ausgabeabschnitte 24 bzw. 25 bzw. 26 angeordnet ist, und an den Verzweigungen über durch Stellsignale steuerbare Weichen 32 und 34, mittels derer Wertdokumente in Abhängigkeit von Stellsignalen den Zweigen 28 bis 30 und damit den Ausgabeabschnitten 24 bis 26 zuführbar sind.

An einem durch die Transporteinrichtung 18 definierten Transportpfad 36 zwischen der Zuführeinrichtung 14, im Beispiel genauer dem Vereinzler 22, und der in Transportrichtung T ersten Weiche 32 nach dem Vereinzler 22 ist eine Sensoreinrichtung 38 angeordnet, die während des Vorbeitransports von Wertdokumenten physikalische Eigenschaften der Wertdokumente erfasst und die Erfassungsergebnisse wiedergebende Sensorsignale bildet, die Sensordaten darstellen. In diesem Beispiel verfügt die Sensoreinrichtung 38 über eine Bilderfassungseinrichtung 40 mit einem optischen Remissionssensor, der ein Remissionsfarbbild des Wertdokuments erfasst, sowie andere nur durch Kästchen symbolisiert Sensoren 42 für physikalische Eigenschaften eines Wertdokuments.

Eine Steuer- und Auswerteeinrichtung 46 ist über Signalverbindungen mit der Sensoreinrichtung 38 und der Transporteinrichtung 18, insbesondere den Weichen 32 und 34, verbunden. In Verbindung mit der Sensoreinrichtung 38 klassifiziert sie ein Wertdokument in Abhängigkeit von den Signalen bzw. Sensordaten der Sensoreinrichtung 38 für das Wertdokument in eine von vorgegebenen Sortierklassen. Diese Sortierklassen können beispielsweise in Abhängigkeit von einem mittels der Sensordaten ermittelten Zustandswert und einem ebenfalls in Abhängigkeit von einem mittels der Sensordaten ermittelten Echtheitswert vorgegeben sein. Als Zustandswerte können beispielsweise die Werte "umlauffähig" oder "nicht umlauffähig", als Echtheitswerte die Werte "gefälscht", "fälschungsverdächtig" oder "echt" verwendet werden. In Abhängigkeit von der ermittelten Sortierklasse steuert sie durch Abgabe von Stellsignalen die Transporteinrichtung 18, hier genauer die Weichen 32 bzw. 34 so an, dass das Wertdokument entsprechend seiner bei der Klassifizierung ermittelten Sortierklasse in einen der Klasse zugeordneten Ausgabeabschnitt der Ausgabeeinrichtung 16 ausgegeben wird. Die Zuordnung zu einer der vorgegebenen Sortierklassen bzw. die Klassifizierung erfolgt dabei in Abhängigkeit von für die Beurteilung des Zustands und die Beurteilung der Echtheit vorgegebenen Kriterien, die von wenigstens einem Teil der Sensordaten abhängen.

Die Steuer- und Auswerteeinrichtung 46 verfügt dazu insbesondere neben wenigstens einer entsprechenden Schnittstelle 44 für die Sensoreinrichtung 38 bzw. deren Sensoren, insbesondere der Bilderfassungseinrichtung 40, über einen Prozessor 48 und einen mit dem Prozessor 48 verbundenen Speicher 50, in dem wenigstens ein Computerprogramm mit Programmcode gespeichert ist, bei dessen Ausführung der Prozessor 48 die Vorrichtung steuert und die Sensorsignale der Sensoreinrichtung 38, insbesondere zur Ermittlung einer Sortierklasse eines bearbeiteten Wertdokuments, auswertet. Weiter ist darin Programmcode gespeichert, bei dessen Ausführung der Prozessor 48 die Vorrichtung steuert und entsprechend der Auswertung die Transporteinrichtung 18 ansteuert.

Die Schnittstelle 44, der Prozessor 50 und der Speicher 48 bzw. ein Abschnitt des Speichers 48, in dem ein entsprechendes Computerprogramm und Verfahrensparameter gespeichert sind, bilden eine Auswerteeinrichtung 47 im Sinne der vorliegenden Offenbarung. Die Auswerteeinrichtung 47 wertet in diesem Beispiel die Signale des Remissionssensors 40 getrennt von denen der anderen Sensoren aus. Der Prozessor 50 und andere Abschnitt des Speichers 48 können daneben auch andere Funktionen erfüllen, im Beispiel die Steuerung der Wertdokumentbearbeitungsvorrichtung 10.

Der Remissionssensor 40 ist dazu ausgebildet, ein RGB-Remissionsbild eines Wertdokuments zu erfassen, während es mittels der Transporteinrichtung 18 an dem Remissionssensor 40 vorbeitransportiert wird, und daraus ein digitales Bild zu erzeugen, das der Auswerteeinrichtung 47 auswertet.

In Abhängigkeit von den Wertdokumenteigenschaften ermittelt die Steuer- und Auswerteeinrichtung 46, genauer die Auswerteeinrichtung 47, unter Verwendung der Sensordaten der verschiedenen Sensoren in Teilauswertungen jeweils, ob die ermittelten Wertdokumenteigenschaften einen Hinweis auf den Zustand bzw. die Echtheit des Wertdokuments darstellen oder nicht. In der Folge können entsprechen-de Daten in der Steuer- und Auswerteeinrichtung 46, beispielsweise dem Speicher 50, zur späteren Verwendung gespeichert werden. In Abhängigkeit von den Teilauswertungen ermittelt die Steuer- und Auswerteeinrichtung 46 dann als Gesamtergebnis für die Prüfung gemäß einem vorgegebenen Gesamtkriterium eine Sortierklasse und bildet in Abhängigkeit von der ermittelten Sortierklasse das Sortier- bzw. Stellsignal für die Transporteinrichtung 18.

Zur Bearbeitung von Wertdokumenten 12 werden in das Eingabefach 20 als Stapel oder einzeln eingelegte Wertdokumente 12 von dem Vereinzeler 22 vereinzelt und vereinzelt der Transporteinrichtung 18 zugeführt, die die vereinzelten Wertdokumente 12 an der Sensoreinrichtung 38 vorbeitransportiert. Diese erfasst die Eigenschaften der Wertdokumente 12, wobei Sensorsignale gebildet werden, die die Eigenschaften des jeweiligen Wertdokuments wiedergeben. Die Steuer- und Auswerteeinrichtung 46 erfasst die Sensorsignale bzw. -daten, ermittelt in Abhängigkeit von diesen eine Sortierklasse, im Beispiel eine Kombination aus einer Echtheitsklasse und einer Zustandsklasse, des jeweiligen Wertdokuments und steuert in Abhängigkeit von dem Ergebnis die Weichen so an, dass die Wertdokumente entsprechend der ermittelten Sortierklasse in einen der jeweiligen Sortierklasse zugeordneten Ausgabeabschnitt transportiert wird.

Die Auswerteeinrichtung 47 zusammen mit der Bilderfassungseinrichtung 40 bilden ein Beispiel für eine Prüfvorrichtung zum Prüfen von Wertdokumenten eines vorgegebenen Wertdokumenttyps, welche jeweils zwei vorgegebene Herstellungselemente, insbesondere Druckschichten und/oder Sicherheitselemente, aufweisen. Dementsprechend enthält das Computerprogramm Instruktionen, um ein Verfahren zum Prüfen von Wertdokumenten eines vorgegebenen Wertdokumenttyps, insbesondere Banknoten, welche jeweils zwei vorgegebene Herstellungselemente, insbesondere Druckschichten und/oder Sicherheitselemente, aufweisen, unter Verwendung von, insbesondere in einem mittels eines im Folgendes geschilderten Adaptionsverfahrens erzeugten, Elementtemplates für die Herstellungselemente auszuführen. Bei dem Prüfverfahren wird mittels des Remissionssensors 40 ein digitales Wertdokumentbild eines zu prüfenden Wertdokuments erfasst und in der Auswerteeinrichtung 47 in einem entsprechenden Abschnitt des Speichers 50 bereitgestellt. Für das bereitgestellte Wertdokumentbild werden Lagen der Herstellungselemente ermittelt und in Echtzeit wird ein Template für das digitale Wertdokumentbild unter Verwendung wenigstens zweier der Elementtemplates für die Herstellungselemente und der ermittelten Lagen der Herstellungselemente sowie in diesem Beispiel eines Hintergrundtemplates ermittelt. Danach wird das digitalen Wertdokumentbildes unter Verwendung des ermittelten Templates geprüft.

Zur Bereitstellung von Elementtemplates dient eine in Fig. 2 grob schematisch gezeigte Adaptionsvorrichtung, das heißt eine Vorrichtung 70 zum Erzeugen von Elementtemplates zum Bilden von Templates beim Prüfen von Wertdokumenten eines vorgegebenen Wertdokumenttyps, wobei Wertdokumente des vorgegebenen Wertdokumenttyps wenigstens zwei vorgegebene Herstellungselemente, insbesondere Druckschichten und/ oder Sicherheitselemente, die sich gegebenenfalls teilweise überlappen, aufweisen. Die Vorrichtung ist eine Datenverarbeitungseinrichtung mit einer Speichereinrichtung 72 zum Speichern von digitalen Trainingsbildern des vorgegebenen Wertdokumenttyps, eines Referenzbildes eines Referenzwertdokuments des vorgegebenen Wertdokumenttyps und vorzugsweise erzeugten Elementtemplates. Die Vorrichtung 70 ist dazu ausgebildet, ein im Folgenden beschriebenes Adaptionsverfahren unter Verwendung der Trainingsbilder und des Referenzbildes durchzuführen und die erzeugten Elementtemplates in der Speichereinrichtung 72 zu speichern. Die Vorrichtung kann dazu wenigstens einen Prozessor 74, der mit der Speichereinrichtung 72 über einen Datenverbindung verbunden ist, und einen mit dem Prozessor 74 über eine Datenverbindung verbundenen Programmspeicher 76 aufweisen, in dem Programmcode gespeichert ist, bei dessen Ausführung die Vorrichtung mittels des Prozessors 74 das im Folgenden geschilderte Adaptionsverfahren unter Verwendung der in der Speichereinrichtung 72 gespeicherten Trainingsbilder ausgeführt. In anderen Ausführungsbeispielen kann der Programmspeicher 76 auch durch einen Abschnitt der Speichereinrichtung 72 gebildet sein. Die Adaptionsvorrichtung 70 kann weiter über eine in der Figur nicht gezeigte Datenschnittstelle, beispielsweise eine Netzwerkkarte, verfügen, über die erzeugte, in der Speichereinrichtung 72 gespeicherte Elementtemplates an eine andere Vorrichtung übertragen werden können.

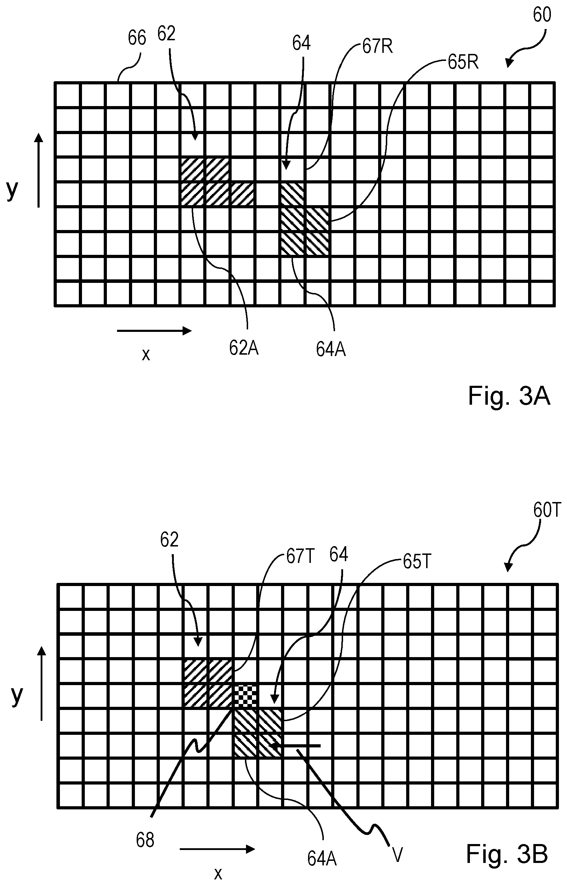

Ein Beispiel für ein digitales Bild 60 eines Wertdokument 12 eines vorgegebenen Wertdokumenttyps mit zwei vorgegebenen Herstellungselementen 62 und 64 in Form von Druckschichten ist grob schematisch in Fig. 3A gezeigt. Das Wertdokument wird als Referenzwertdokument verwendet, so dass das Wertdokumentbild ein Referenzbild darstellt.

Das digitale Bild 60 enthält Pixel 66, die im Beispiel auf einem Quadratgitter angeordnet sind und Orte in dem digitalen Bild und damit auf dem abgebildeten Wertdokument darstellen. Das Bild ist dabei so vorverarbeitet, dass es nur das Wertdokument 12 vollflächig darstellt, die Kanten des Wertdokuments in dem Bild also entlang der entsprechenden Randpixel verlaufen. Dies Vorverarbeitung wird in diesem Beispiel für alle Bilder durchgeführt, so dass die Bilder entsprechende Darstellungen beinhalten.

Gezeigt sind, gekennzeichnet durch unterschiedliche Musterung, zwei Bereiche 62 und 64, die die verschiedene Herstellungselemente, im Beispiel Druckschichten, zeigen, die sich in diesem Beispiel nicht überlappen.

Fig. 3B zeigt grob schematisch ein digitales Bild 60T eines anderen Wertdokuments des vorgegebenen Wertdokumenttyps. Bei dem Wertdokument ist das Herstellungselement 64 bzw. im Beispiel die entsprechende Druckschicht relativ zu den Rändern des Wertdokuments und damit in dem Bild gegenüber dem in Fig. 3A um einen Vektor V versetzt. Das Herstellungselement 64 ist daher auch relativ zu dem Herstellungselement 62 anders positioniert, als in Fig. 3A. Dementsprechend sind die Bereiche, die die Herstellungselemente 62 bzw. 64 zeigen bzw. diesen entsprechen, gegenüber denen in Fig. 3A versetzt. Zudem überlappen sich die Druckschichten, so dass ein entsprechendes Pixel 68 ein anderes Erscheinungsbild, in der Figur symbolisiert durch eine andere Schraffur, zeigt.

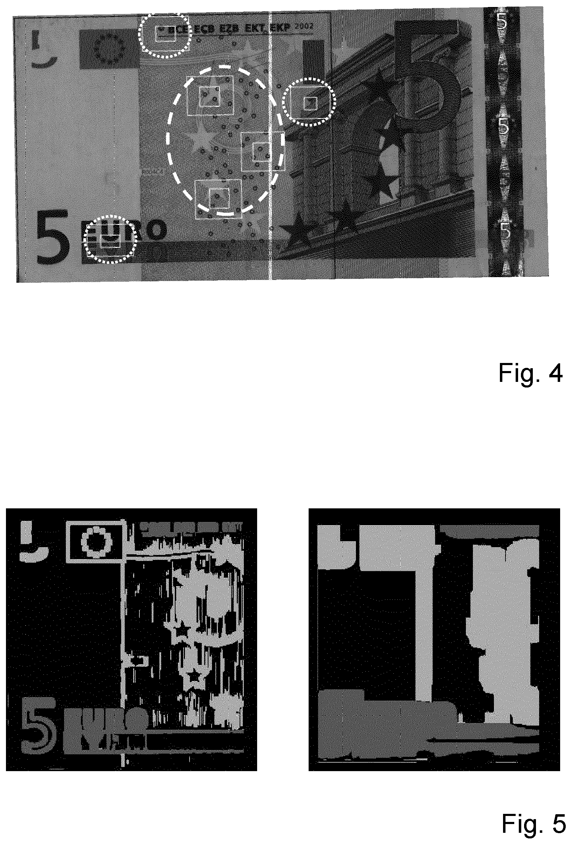

Ein Beispiel eines Trainingsbildes eines Wertdokuments in Form einer Banknote, genauer eine 5 Euro-Banknote, zeigt Figur 4. Im vorliegenden Beispiel sind im erfassten Bild unter anderem eine mittels Stahlstich-Tiefdrucks erzeugte erste Druckschicht (u.a. "5 Euro" und "BCE ECB EZB...") und eine mittels Offsetdrucks erzeugte zweite Druckschicht (u.a. Sterne und kleine Ringe) zu sehen.

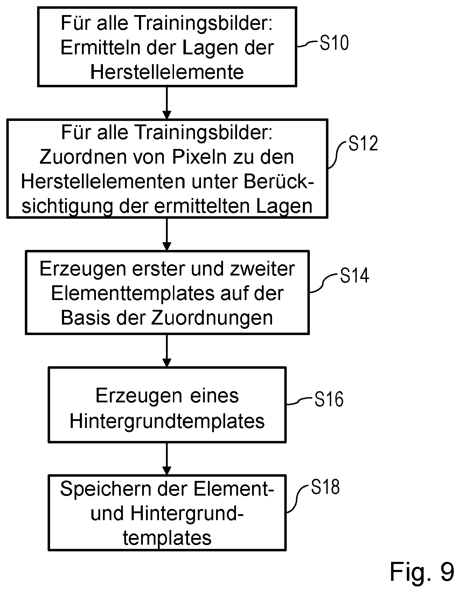

Zum Erzeugen von Elementtemplates wird das folgende beispielhafte Adaptionsverfahren verwendet, das in Fig. 9 grob schematisch veranschaulicht ist.

Bei dem Adaptionsverfahren werden digitale Trainingsbilder von Trainings-wertdokumenten des vorgegebenen Wertdokumenttyps und ein digitales Referenzbild eines Referenzwertdokuments des vorgegebenen Wertdokumenttyps verwendet. Im Beispiel werden dazu fertige und saubere, vorzugsweise druckfrische Wertdokumente des vorgegebenen Wertdokumenttyps verwendet, die vorzugsweise Variationen in der Lage der Herstellungselemente aufweisen. Vorzugsweise umfassen die Wertdokumente auch solche mit großen Unterschieden in der Lage der Herstellungselemente.

Die Trainingsbilder und das Referenzbild können beispielsweise mit der beschriebenen Bearbeitungsvorrichtung 10, insbesondere dem Remissionssensor 40, erfasst werden, wozu die der Auswerteeinrichtung 47 zugeführten digitalen Bilder gespeichert werden. Diese können mittels eines Speichermediums oder über eine nicht gezeigte Datenverbindung an die Adaptionsvorrichtung 70 übertragen und dort in der Speichereinrichtung 72 gespeichert und damit bereitgestellt werden. Die digitalen Bilder haben jeweils gleiche Pixelanzahlen und -anordnungen und zeigen das gesamte Wertdokument.

In Schritt S10 wird für jedes der Trainingsbilder und vorzugsweise das Referenzbild eine Lage der Herstellungselemente ermittelt.

Die Lagen werden jeweils in Bezug auf dasselbe Lagebezugssystem ermittelt, das durch die Ränder des Wertdokuments in dem Bild bzw., da das Bild nur das gesamte Wertdokument zeigt, durch die Ränder des Bildes bzw. entsprechende Achsen gegeben ist.

Zur Ermittlung der Lagen werden im vorliegenden Beispiel Ankerbereiche 62A und 64A verwendet, die zuvor für Wertdokumente des vorgegebenen Wertdokumenttyps festgelegt wurden und für das Herstellungselement charakteristisch und insbesondere immer sichtbar sind. In diesem Ausführungsbeispiel wird zur Vereinfachung der Darstellung jeweils nur ein Ankerbereich verwendet, in anderen Ausführungsbeispielen werden vorzugsweise wenigsten zwei oder mehr Ankerbereiche für jedes der Herstellungselemente verwendet. Die Ankerbereiche beinhalten meist mehrere Pixel sind aber zur Vereinfachung in den grob schematischen Figuren 3A und 3B durch nur ein Pixel dargestellt. Mit an sich bekannten Verfahrens können die Ankerbereiche jeweils in den digitalen Bildern gesucht werden. Als Lage des Ankerbereichs kann im vorliegenden Beispiel der Mittelwert über die Orte des Musters verwendet werden, um die Lage festzulegen.

In dem in Figur 4 gezeigten Wertdokumentbild sind Ankerpunkte bzw. die zugehörigen Bereiche durch jeweils zwei übereinanderliegende Rechteckformen gekennzeichnet. Um deren Zugehörigkeit zur jeweiligen Druckschicht zu veranschaulichen, sind Ankerpunkte der ersten Druckschicht von gepunkteten Linien und Ankerpunkte der zweiten Druckschicht von gestrichelten Linien umgeben.

Die Lage wird im vorliegenden Beispiel durch einen Lagevektor in einem rechtwinkligen Koordinatensystem mit Achsen parallel zu den Rändern des Wertdokuments beschrieben, dessen erste Komponente die x-Koordinate des Pixels und die zweite Koordinate des y-Pixels ist.

In dem folgenden Schritt S12 werden für die Trainingsbilder jeweils Pixel zu den Herstellungselemente bzw. Herstellungselemente zu Pixeln zugeordnet, wobei das Referenzbild verwendet und die Lage der Herstellungselemente in den Trainingsbildern berücksichtigt wird.

Im Beispiel werden für jedes der Trainingsbilder folgende Teilschritte für jedes der vorgegebenen Herstellungselemente durchgeführt:
Zur Berücksichtigung der Lage wird für das jeweilige Herstellungselement ein Verschiebungsvektor ermittelt, der der Differenz der ermittelten Lage des jeweiligen Herstellungselements in dem Trainingsbild und der Lage des jeweiligen Herstellungselements in dem Referenzbild bzw. der Differenz der Lagevektoren entspricht.

Zur Zuordnung von Pixeln wird eine vorgegebenen Pixelumgebung eines jeweiligen Pixels in dem jeweiligen Trainingsbild mit jeweils einer vorgegebenen Pixelumgebung eines entsprechenden Pixels des Referenzbildes verglichen, wobei die Lage eines jeweiligen Herstellungselements berücksichtigt wird. Die Pixelumgebungen für ein Pixel sind jeweils gleich definiert.

Im Beispiel geschieht dies, indem die Pixelumgebung um das jeweilige Pixel in dem jeweiligen Trainingsbild mit der entsprechenden Pixelumgebung des entsprechenden Pixels in dem Referenzbild verglichen unter der Hypothese, dass das jeweilige Pixel in dem Trainingsbild zu einem der Herstellungselemente gehört. Das bedeutet, dass die Pixelumgebung des Pixels in dem Trainingsbild mit einer Pixelumgebung eines entsprechenden Pixels in dem Referenzbild verglichen, wobei die Differenz der Lagen der Pixelumgebungen in dem Trainingsbild und dem Referenzbild dem Verschiebungsvektor, d. h. der Differenz der Lage des jeweiligen Herstellungselements in dem Trainingsbild und dem in dem Referenzwertbild, entspricht.

Bezogen auf das Trainingsbild bedeutet dies, dass für ein gegebenes der Herstellungselemente das Trainingsbild gegenüber dem Referenzbild um den Verschiebungsvektor, aber in entgegengesetzter Richtung, d. h. in Richtung und um eine Strecke, verschoben bzw. versetzt wird, der bzw. die durch die Differenz der Lagen des Herstellungselements in dem Trainingsbild und dem in dem Referenzwertbild gegeben ist, und Pixelumgebungen und Pixel in dem verschobenen Trainingsbild und dem Referenzbild verglichen werden.

Der Vergleich erfolgt durch Ermittlung eines Übereinstimmungsgrades der Pixel-Eigenschaften der Pixel der Pixelumgebungen. Für jede Pixelumgebung eines jeweiligen Pixels, beispielsweise eine 5x5 Pixel-Umgebung des jeweiligen Pixels einschließlich des Pixels selbst, wird beispielsweise ein Grad der Übereinstimmung der Pixeldaten für die Pixelumgebung in dem verschobenen Trainingsbild mit denen in dem Referenzbild ermittelt; im Beispiel wird eine 2D-Korrelation für die Pixeldaten der Pixelumgebung mit dem Pixel als Übereinstimmungsgrad ermittelt.

In den Beispielen in Fig. 3A und 3B beträgt die Verschiebung der Ankerpunkte 64A für das Herstellungselement 64 zwei Pixel in x-Richtung nach links, der Verschiebungsvektor V hat nur eine Komponente, die nicht Null ist. Beim Vergleich wird daher beispielsweise das Pixel 65T und dessen Pixelumgebung in dem Trainingsbild in Fig. 3B mit dem Pixel und dessen Pixelumgebung in dem Referenzbild verglichen, das entgegen dem Verschiebungsvektor V, also um -V, verschoben ist; dies ist in Fig. 3A das Pixel 65R. Gehören die Pixel zu demselben Herstellungselement ergibt sich eine sehr gute oder perfekte Übereinstimmung, sonst aber nicht: beispielsweise stimmt das entgegen dem Verschiebungsvektor V verschobene Pixel 67T und dessen Umgebung in seinen Pixeleigenschaften nicht mit der des Pixels 67R und seiner Umgebung in dem Referenzbild überein.

Nachdem für jedes der vorgegebenen Herstellungselemente diese Übereinstimmungsgrade ermittelt wurden, wird dann in Abhängigkeit von den ermittelten Übereinstimmungsgraden mittels eines Zuordnungskriteriums entschieden, ob das Pixel einem der Herstellungselemente zugeordnet werden kann und wenn, zu welchem der Herstellungselemente. Das Zuordnungskriterium besteht im vorliegenden Beispiel darin, dass dasjenige Herstellungselement zugeordnet wird, das den höchsten Grad der Übereinstimmung aufweist. Diese Zuordnung erfolgt aber nur, wenn der Übereinstimmungsgrad einen vorgegebenen Mindestwert überschreitet. Ist dies nicht der Fall, erfolgt keine Zuordnung eines Herstellungselements.

In dem folgenden Schritt S14 wird für jedes der Herstellungselemente ein erstes Elementtemplates und ein zweites Elementtemplate erzeugt.

Dies geschieht derart, dass das erste Elementtemplate für das jeweilige Herstellungselement diejenigen Pixel enthält, die bei allen Trainingsbildern dem jeweiligen Herstellungselement zugeordnet wurden. Die Elementtemplate-Pixeldaten für das Pixel werden in Abhängigkeit von den entsprechenden Pixeldaten der Trainingsbilder ermittelt. Für eine Verschmutzungsprüfung können beispielsweise als Pixeldaten unter und obere Grenzen für zulässig Pixeldatenwerte festgelegt werden, die sich aus dem Minimum bzw. Maximum der entsprechenden Pixeldaten der entsprechenden Pixel in den Trainingsbildern ergeben.

Für jedes der Herstellungselemente wird ein zweites Elementtemplates derart erzeugt, dass es diejenigen Pixel enthält, die bei einem oder mehreren Trainingsbildern dem jeweiligen Herstellungselement zugeordnet wurden. Auch hier können die Elementtemplate-Pixeldaten für das Pixel in Abhängigkeit von den Pixeldaten für entsprechende Pixel in den Trainingsbildern ermittelt werden, bei denen die Zuordnung gefunden wurde. Bei einer Verschmutzungsprüfung können beispielsweise als Pixeldaten untere und obere Grenzen für zulässig Pixeldatenwerte festgelegt werden, die aus dem Minimum bzw. Maximum der entsprechenden Pixeldaten der Pixel in den Trainingsbildern ermittelt werden.

In Schritt S16 wird ein Hintergrundtemplate erzeugt, das diejenigen Pixel enthält, die in keinem der Elementtemplates, insbesondere keinem der ersten und zweiten Elementtemplates, enthalten sind. Diesen werden als Pixeldaten Daten zugeordnet, die unter Verwendung der Pixeldaten entsprechender Pixel in den Trainingsbildern ermittelt werden. Bei einer Verschmutzungsprüfung können beispielsweise als Pixeldaten unter und obere Grenzen für zulässig Pixeldatenwerte festgelegt werden, die sich aus dem Minimum bzw. Maximum der entsprechenden Pixeldaten der Pixel in den Trainingsbildern ergeben.

In Schritt S18 werden in diesem Beispiel die Elementtemplates und das Hintergrundtemplate bzw. entsprechende Daten in dem Speicher 72 gespeichert. Sie können auch mittels eines mobilen Speicher oder über eine Datenverbindung an eine andere Vorrichtung übertragen werden, die diese dann vorzugsweise speichert und besonders bevorzugt verwendet.

Beim Betrieb der Vorrichtung 10 wird in dem Beispiel ein Prüfverfahren zum Prüfen von Wertdokumenten des vorgegebenen Wertdokumenttyps durchgeführt. Hierzu sind in der Auswerteeinrichtung 47 in dem Speicher 48 Elementtemplates, im Beispiel die mit dem zuvor beschriebenen Verfahren ermittelten, Elementtemplates und, in diesem Ausführungsbeispiel in demselben Speicher 48, Instruktionen eines Computerprogramms gespeichert, bei dessen Ausführung durch die Auswerteeinrichtung bzw. deren Prozessor das Prüfverfahren durchgeführt wird. Für das Prüfverfahren sind die ermittelten Elementtemplates in dem Speicher 48 gespeichert. Das Prüfverfahren wird in Echtzeit durchgeführt, wobei die Wertdokumente mit einer Rate von mehr als 25 Wertdokumenten pro Sekunde, vorzugsweise mehr als 30 Wertdokumenten pro Sekunde an der Bilderfassungseinrichtung 40 vorbeitransportiert werden.

Bei dem Prüfverfahren werden jeweils zwei Elementtemplates für die Herstellungselemente und ein Hintergrundtemplate verwendet. Diese sind mit dem oben beschriebenen Adaptionsverfahren erzeugt.

Ein erstes Elementtemplates für ein Herstellungselement, im Beispiel eine Druckschicht, legt fest, welche Pixel eines Bildes eines zu prüfenden Wertdokuments 12 eindeutig diesem Herstellungselement, im Beispiel dieser Druckschicht, zuzuordnen sind und welche Elementtemplate-Pixeldaten für die jeweiligen Pixel eines zu erstellenden individuellen Templates zu verwenden sind.

Ein zweites Elementtemplate für ein Herstellungselement, im Beispiel eine Druckschicht, legt fest, welche Pixel eines Bildes eines zu prüfenden Wertdokuments 12 nach einem vorgegebenen Kriterium als diesem Herstellungselement bzw. dieser Druckschicht zugehörig anzusehen sind und welche Elementtemplate-Pixeldaten zur Ermittlung der Template-Pixeldaten für die jeweiligen Pixel für das Wertdokumentbild zu verwenden sind.

Das Hintergrund-Template ist nur dem Wertdokument 12 als Ganzem zugeordnet und legt fest, welche Template-Pixeldaten für Pixel zu verwenden sind, die nicht einem der Herstellungselement bzw. einer der Druckschichten zuzuordnen bzw. zugehörig sind und damit in keinem der Elementtemplates enthalten sind. Ein solches Hintergrund-Template liegt also für einen Wertdokumenttyp nur einmal vor.

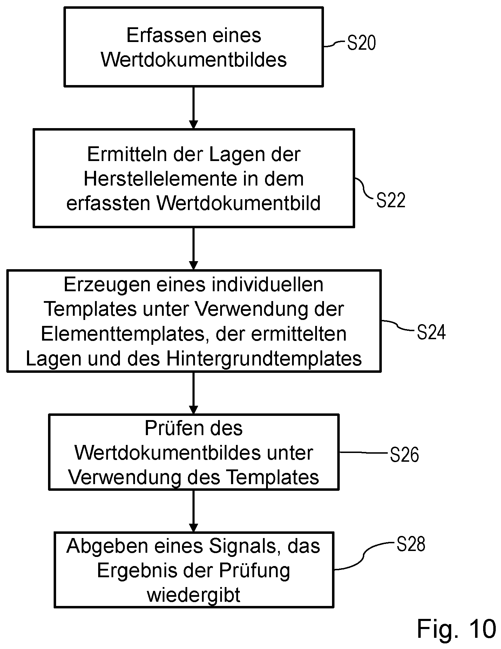

Das Prüfverfahren ist in Fig. 10 grob schematisch veranschaulicht.

Wie eingangs beschrieben, werden zu prüfende Wertdokumente 12 durch die Transporteinrichtung 18 an der Sensoreinrichtung 38 und damit dem Remissionssensor 40 vorbeitransportiert.

In Schritt S20 wird für ein an dem Remissionssensor 40 vorbeitransportiertes Wertdokument ein digitales Bildes des Wertdokuments, also ein Wertdokumentbild, erfasst und, gegebenenfalls nach einer Vorverarbeitung, an die Auswerteeinrichtung 47 übertragen. Dort wird es in dem Speicher 48 zum Prüfen bereitgestellt. Bei einer solchen Vorverarbeitung könnte beispielsweise das eigentliche Bild des Wertdokuments ausgerichtet werden, wenn das Wertdokument bei der Erfassung des Wertdokumentbildes nicht perfekt relativ zu dem Remissionssensor ausgerichtet war und dementsprechend die Längs- und Querränder nicht parallel zu den entsprechenden Achsen des Koordinatensystems verlaufen.

In Schritt S22 werden für das bereitgestellte Wertdokumentbild Lagen der Herstellungselemente ermittelt, was entsprechend Schritt S10 erfolgt.

In Schritt S24 wird dann ein individuelles Template für das digitale Wertdokumentbild unter Verwendung der Elementtemplates für die Herstellungselemente und der ermittelten Lagen der Herstellungselemente sowie des Hintergrundtemplates erzeugt.

Dazu werden die Elementtemplates für die Herstellungselemente entsprechend den jeweils ermittelten Lagen der jeweilige Herstellungselemente verschoben. Im Beispiel des Wertdokumentbildes in Fig. 3B würden also die Elementtemplates für das Herstellungselement 64 in Fig. 3A aus der Position in Fig. 3A um den Vektor V verschoben.

Zunächst werden die ersten Elementtemplates verwendet. Pixeln des Templates, die in den entsprechend den ermittelten Lagen der Herstellungselemente verschoben ersten Elementtemplates vorhanden sind, werden Template-Pixeldaten zugeordnet, die in Abhängigkeit von Elementtemplate-Pixeldaten der entsprechenden den ermittelten Lagen der Herstellungselemente verschoben ersten Elementtemplates ermittelt sind. Genauer werden in dem Fall, dass das Pixel in nur einem der verschobenen Elementtemplates vorhanden ist, für das Pixel als Template-Pixeldaten die entsprechenden Elementtemplate-Pixeldaten verwendet. Findet sich das Pixel in dem Wertdokument dagegen in beiden entsprechend den Lagen verschobenen Elementtemplates, werden die Template-Pixeldaten aus den entsprechenden Elementtemplate-Pixeldaten ermittelt. Im Beispiel einer Verschmutzungsprüfung könnte als untere Grenze beispielsweise das Minimum der Elementtemplate-Pixeldaten der entsprechenden Pixel und als obere Grenze das Maximum ermittelt werden.

Für die verbliebenen Pixel des Templates, die in wenigstens einem der entsprechend der ermittelten Lagen der Herstellungselemente verschobenen zweiten Elementtemplates vorhanden sind, werden Template-Pixeldaten unter Verwendung der Elementtemplate Pixeldaten eines jeweils entsprechenden Pixels des wenigstens einen der zweiten Elementtemplates, die entsprechend der ermittelten Lagen der Herstellungselemente verschoben sind, ermittelt. Das Vorgehen unterscheidet sich nicht grundsätzlich von dem für die ersten Elementtemplates.

Schließlich werden für die verbliebenen Pixel des Templates, die nicht in den ersten oder zweiten Elementtemplates, sondern nur in dem Hintergrund-template vorhanden sind, jeweils Template-Pixeldaten unter Verwendung der Hintergrundtemplate-Pixeldaten eines jeweils entsprechenden Pixels des Hintergrundtemplates ermittelt. Damit liegt ein vollständiges Template für das ganze Wertdokument vor.

In Schritt S26 wird dann das digitalen Wertdokumentbild unter Verwendung des ermittelten Templates geprüft. Hierzu können an sich bekannte Verfahren verwendet werden, die ein Template voraussetzen. Bei einer Verschmutzungsprüfung kann beispielsweise geprüft werden, ob die Pixeldaten für die Pixel eines Wertdokumentbildes innerhalt eines Intervalls liegen, dessen Grenzen durch die Template-Pixeldaten des entsprechenden Pixels des Templates gegeben sind. Liegen die Pixeldaten unterhalb des Intervalls, liegt eine Verschmutzung vor.

Als Ergebnis kann in Schritt S28 ein Signal abgegeben werden, das das Ergebnis des Prüfens wiedergibt.

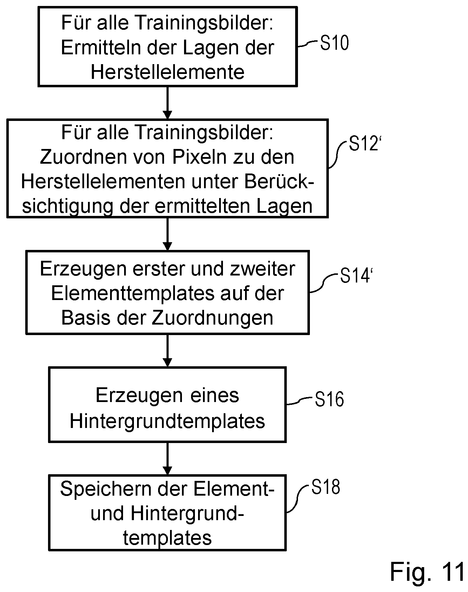

Ein zweites Ausführungsbeispiel unterscheidet sich von dem ersten Ausführungsbeispiel dadurch, dass bei dem Adaptionsverfahren die Zuordnung der Pixel zu Herstellungselementen und die nachfolgende Erstellung der Elementtemplates modifiziert ist. Die Schritte S12 und S14 sind dabei ersetzt durch die Schritte S12' und S14'. Das Adaptionsverfahren ist grob schematisch in Fig. 11 veranschaulicht.

In Schritt S12' werden im Beispiel zwei Zuordnungen durchführt, die sich durch die Größe der Pixelumgebung und das Zuordnungskriterium unterscheiden. Die jeweilige Ermittlung des Übereinstimmungsgrades erfolgt analog zu dem ersten Ausführungsbeispiel.

Genauer erfolgt eines erstes Zuordnen des jeweiligen Pixel des Trainingsbildes unter Berücksichtigung der jeweiligen Lage der Herstellungselemente zu einem der Herstellungselemente in Abhängigkeit von den ermittelten ersten Übereinstimmungsgraden gemäß dem vorgegebenen ersten Zuordnungskriterium. Die Pixelumgebung ist beispielsweise jeweils eine 3x3-Pixel-Umgebung des Pixels einschließlich des Pixels.

Für das zweite Zuordnen bzw. die zweite Zuordnung wird für Pixel des Trainingsbildes unter Berücksichtigung der jeweils ermittelten Lage der Herstellungselemente ein zweiter Grad einer Übereinstimmung einer zweiten Pixelumgebung des jeweiligen Pixels des Trainingsbildes mit einer entsprechenden Pixelumgebung eines entsprechenden Pixels des Referenzbildes ermittelt. Die zweite Pixelumgebung kann beispielsweise eine 5x5-Pixelumgebung sein.

Die zweite Zuordnung erfolgt analog zu der ersten Zuordnung, wobei sich das zweite Zuordnungskriterium von dem ersten Zuordnungskriterium durch die Wahl des Mindestwertes unterscheiden kann. Der Mindestwert kann jedoch auch gleich gewählt werde.

In dem geänderten Schritt S14' werden auf der Grundlage dieser Zuordnungen die ersten und zweiten Elementtemplates erzeugt.

Genauer wird für jedes der Herstellungselemente ein erstes Elementtemplate unter Verwendung der entsprechenden ersten Zuordnung erzeugt, das diejenigen Pixel enthält, welche bei allen Trainingsbildern dem jeweiligen Herstellungselement bei dem ersten Zuordnen zugeordnet wurden. Als Elementtemplate-Pixeldaten wird ein Mittelwert über die Pixeldaten des jeweiligen Pixels in den Trainingsbildern verwendet. In anderen Ausführungsbeispielen könnten die Elementtemplate-Pixeldaten auch eine untere und obere Grenze für ein Intervall zulässiger Werte umfassen, die durch das Minimum bzw. das Maximum der Pixeldaten des jeweiligen Pixels in den Trainingsbildern gegeben sein können.

Für jedes der Herstellungselemente wird weiter ein zweites Elementtemplate unter Verwendung der entsprechenden zweiten Zuordnung erzeugt, das diejenigen Pixel enthält, welche bei wenigstens einem der Trainingsbildern dem jeweiligen Herstellungselement bei dem zweiten Zuordnen zugeordnet wurden. Als Elementtemplate-Pixeldaten wird ein Mittelwert über die Pixeldaten des jeweiligen Pixels in den Trainingsbildern verwendet. In anderen Ausführungsbeispielen könnten die Elementtemplate-Pixeldaten auch eine untere und obere Grenze für ein Intervall zulässiger Werte umfassen, die durch das Minimum bzw. das Maximum der Pixeldaten des jeweiligen Pixels in den Trainingsbildern gegeben sein können.

Die andere Schritte sind gegenüber dem ersten Ausführungsbeispiel unverändert.

Das entsprechende Prüfverfahren bleibt, bis auf die Verwendung der anderen Elementtemplates unverändert.

Diese Variante sei noch am Beispiel des Wertdokumenttyps in Fig. 4 veranschaulicht.

Die in den ersten Elementtemplates enthaltenen Pixel und die diesen Pixeln zugeordneten Elementtemplate-Pixeldaten charakterisieren Stellen auf den Trainings-Wertdokumenten, an welchen die jeweilige Druckschicht dominant ist, d.h. dass die jeweilige Druckschicht alle anderen möglicherweise vorhandenen Druckschichten an dieser Stelle überlagert, so dass die anderen Druckschichten quasi nicht sichtbar sind.

Figur 5 (links) zeigt ein Beispiel einer für einen Ausschnitt eines Bildes eines Trainings-Wertdokuments in Fig. 4 bei einer Pixelumgebung von ± 2 Pixeln vorgenommenen Zuordnung von Pixeln zur ersten Druckschicht (dunkelgrau) bzw. zweiten Druckschicht (hellgrau). Für schwarze Bereiche konnte keine eindeutige Zuordnung zu einer Druckschicht vorgenommen werden.

Figur 5 (rechts) zeigt ein Beispiel einer für einen Teil eines Trainings-Wertdokuments in Fig. 4 bei einer Pixelumgebung von ± 10 Pixeln vorgenommenen Zuordnung von Pixeln zur ersten Druckschicht (dunkelgrau) bzw. zweiten Druckschicht (hellgrau). Für schwarze Bereiche konnte keine eindeutige Zuordnung zu einer Druckschicht vorgenommen werden.

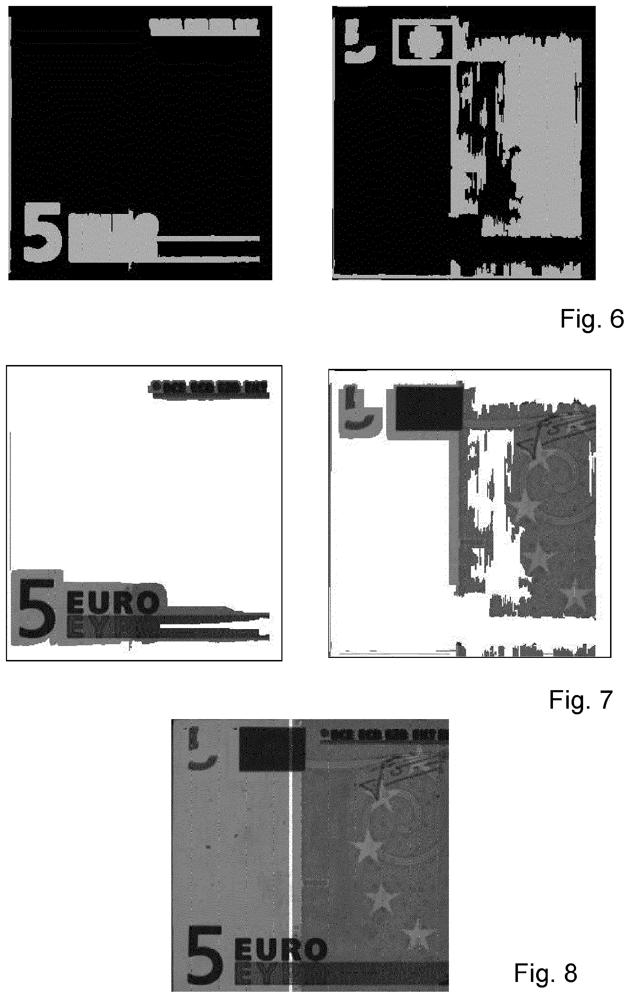

Figur 6 zeigt jeweils ein Beispiel eines ersten Elementtemplates (hellgrau dargestellte Bereiche) für die erste Druckschicht (links) und die zweite Druckschicht (rechts) in einem Abschnitt der Trainings-Wertdokumente von Wertdokumenttyp in Fig. 4. Schwarz dargestellte Bereiche sind nicht Teil der jeweiligen ersten Elementtemplates.

Figur 7 zeigt jeweils ein Beispiel eines zweiten Elementtemplates für die erste Druckschicht (links) und die zweite Druckschicht (rechts) in einem Abschnitt der Trainings-Wertdokumente des Wertdokumenttyps in Fig. 4. Die weiß dargestellten Bereiche sind nicht von Pixeln des jeweiligen zweiten Elementtemplates und damit auch nicht von Pixeln der ersten Elementtemplates belegt, sie gehören zum Hintergrundtemplate.

Figur 8 zeigt ein Beispiel eines individuellen Templates für ein Wertdokument bzw. Wertdokumentbild, das aus ersten und zweiten Elementtemplates und einem Hintergrundtemplate, welche bzw. welches vorzugsweise in dem vorstehend beschriebenen Verfahren zum Erzeugen von Templates erzeugt wurden bzw. wurde, zusammengesetzt ist..

Weitere Ausführungsbeispiele unterscheiden sich von den zuvor beschriebenen Ausführungsbeispielen dadurch, dass als Elementtemplate-Pixeldaten bzw. Hintergrundtemplate-Pixeldaten Werte verwendet werden, die eine Funktion der Pixeldaten der entsprechenden Pixel in den Trainingsbildern sind, in denen sie dem Herstellungselement bzw. dem Hintergrund zugeordnet wurden. Beispielsweise könnten die Werte Mittelwerte über die Pixeldaten des Pixels sein. Diese Templates könnten sich für eine andere Art der Verschmutzungsprüfung, aber auch für eine Echtheitsprüfung eignen. Mögliche akzeptable Toleranzen bei der Prüfung können durch das Prüfverfahren vorgegeben sein.

In anderen Ausführungsbeispielen könnten anstelle von Intervallgrenzen auch vorgegebenen Punkte eines Intervalls, beispielsweise dessen Mitte, und dessen Länge als Pixeldaten verwendet werden.

Noch weitere Ausführungsbeispiele können sich von den zuvor geschilderten Ausführungsformen dadurch unterscheiden, dass die Pixelumgebungen größer gewählt werden. Die Wahl kann von der Auflösung der digitalen Bilder und den Größen von sichtbaren Strukturen auf Wertdokumenten des vorgegebenen Wertdokumenttyps abhängen.

Weitere Ausführungsbeispiele unterscheiden sich von den zuvor geschilderten Ausführungsbeispielen dadurch, dass die Steuer- und Auswerteeinrichtung 46 in zwei Teile aufgeteilt ist, eine der Auswerteeinrichtung 47 entsprechende Auswerteeinrichtung und eine von dieser getrennte Steuereinrichtung, die Signale der Auswerteeinrichtung empfängt und zur Steuerung verwendet.

In noch anderen Ausführungsbeispielen kann die Adaptionsvorrichtung Teil einer Wertdokumentbearbeitungsvorrichtung sein. Beispielsweise könnte die Auswerteeinrichtung der Vorrichtung des ersten Ausführungsbeispiels ein entsprechendes Computerprogramm aufweisen, das in einer Adaptionsbetriebsart der Wertdokumentbearbeitungsvorrichtung, in der keine Wertdokumente bearbeitet werden, ausgeführt wird.

## Patentansprüche

1. Verfahren zum Erzeugen von Elementtemplates zum Bilden von Templates beim Prüfen von Wertdokumenten (12) eines vorgegebenen Wertdokumenttyps, insbesondere Banknoten, wobei Wertdokumente (12) des vorgegebenen Wertdokumenttyps wenigstens zwei vorgegebene Herstellungselemente (62, 64), insbesondere Druckschichten und/oder Sicherheitselemente, die sich gegebenenfalls teilweise überlappen, aufweisen und die Elementtemplates den Herstellungselementen (62, 64) entsprechen, wobei digitale Trainingsbilder (60, 60T) von Trainingswertdokumenten des vorgegebenen Wertdokumenttyps und ein digitales Referenzbild eines Referenzwertdokuments des vorgegebenen Wertdokumenttyps, welche jeweils Pixel (66) aufweisen, denen jeweils Pixeldaten zugeordnet sind, verwendet werden, mit folgenden Schritten:
- für die Trainingsbilder jeweils Ermitteln einer Lage der Herstellungselemente (62, 64), und
Zuordnen von Pixeln (66) des jeweiligen Trainingsbildes zu den Herstellungselementen (62, 64) unter Verwendung des Referenzbildes, wobei zur Zuordnung von Pixeln eine vorgegebene Pixelumgebung eines jeweiligen Pixels in dem jeweiligen Trainingsbild mit jeweils einer vorgegebenen Pixelumgebung eines entsprechenden Pixels des Referenzbildes verglichen wird, wobei die Lage eines jeweiligen Herstellungselements berücksichtigt wird, wobei zur Berücksichtigung der Lage für das jeweilige Herstellungselement ein Verschiebungsvektor ermittelt wird, der der Differenz der ermittelten Lage des jeweiligen Herstellungselements in dem Trainingsbild und der Lage des jeweiligen Herstellungselements in dem Referenzbild entspricht,
- für jedes der Herstellungselemente (62, 64) Erzeugen eines ersten Elementtemplates, das diejenigen Pixel (66) enthält, die bei allen Trainingsbildern dem jeweiligen Herstellungselement (62, 64) zugeordnet wurden, und
- für jedes der Herstellungselemente (62, 64) Erzeugen eines zweiten Elementtemplates, das diejenigen Pixel (66) enthält, die bei einem oder mehreren der Trainingsbilder dem jeweiligen Herstellungselement (62, 64) zugeordnet wurden.

2. Verfahren nach Anspruch 1, bei dem die Trainings-Wertdokumente und das Referenz-Wertdokument
- fertige und/oder druckfrische Wertdokumente (12) des vorgegebenen Wertdokumenttyps, insbesondere gleicher Währung und/oder Denomination, umfassen oder vorzugsweise sind.

3. Verfahren nach einem der vorhergehenden Ansprüche das den weiteren Schritt umfasst:
- Erzeugen eines Hintergrundtemplates, welches diejenigen Pixel, die bei keinem der Trainingsbilder einem der Herstellungselemente (62, 64) zugeordnet wurden, und diesen jeweils zugeordnete Hintergrundtemplate-Pixeldaten enthält, die vorzugsweise aus Pixeldaten, die den jeweiligen Pixeln der Trainingsbilder zugeordnet sind, ermittelt werden.

4. Verfahren nach einem der vorhergehenden Ansprüche, bei dem beim Ermitteln der Lage der jeweiligen Herstellungselemente (62, 64) in einem jeweiligen der Trainingsbilder die Lage in Bezug auf dasselbe Lagebezugssystem oder relativ zu wenigstens einem der Herstellungselemente (62, 64) in einem vorgegebenen der Trainingsbilder oder relativ zu wenigstens einem der Herstellungselemente in dem Referenzbild ermittelt wird.

5. Verfahren nach einem der vorhergehenden Ansprüche, bei dem beim Zuordnen von Pixeln des jeweiligen Trainingsbildes zu den Herstellungselementen (62, 64) für ein jeweiliges Pixel des jeweiligen Trainingsbildes ein Grad einer Übereinstimmung zwischen einer Pixelumgebung des Pixels mit einer Pixelumgebung eines entsprechenden Pixels in dem Referenzbild ermittelt werden, wobei die jeweilige Pixelumgebungen des jeweiligen Pixels in dem Trainingsbild und in dem Referenzbild entsprechend der jeweiligen relativen Lage des jeweiligen Herstellungselements (62, 64) in dem Trainingsbild zu der in dem Referenzbild versetzt sind, und das jeweilige Pixel des Trainingsbildes in Abhängigkeit von den ermittelten Übereinstimmungsgraden gemäß einem vorgegebenen Zuordnungskriterium einem der Herstellungselemente zugeordnet wird.

6. Verfahren nach einem der Ansprüche 1 bis 4, bei dem beim Zuordnen von Pixeln des jeweiligen Trainingsbildes zu den Herstellungselementen für ein jeweiliges Pixel des jeweiligen Trainingsbildes ein erster Grad einer Übereinstimmung zwischen einer ersten Pixelumgebung des Pixels mit einer ersten Pixelumgebung eines Pixels in dem Referenzbild ermittelt werden, wobei die erste Pixelumgebungen in dem Trainingsbild und in dem Referenzbild entsprechend der jeweiligen relativen Lage des jeweiligen Herstellungselements in dem Trainingsbild zu der in dem Referenzbild versetzt sind, und das jeweilige Pixel des Trainingsbildes bei einer ersten Zuordnung in Abhängigkeit von den ermittelten ersten Übereinstimmungsgraden gemäß einem vorgegebenen ersten Zuordnungskriterium einem der Herstellungselemente zugeordnet wird, und
für ein jeweiliges Pixel des jeweiligen Trainingsbildes ein zweiter Grad einer Übereinstimmung zwischen einer zweiten Pixelumgebung des Pixels mit einer zweiten Pixelumgebung in dem Referenzbild ermittelt werden, wobei die zweite Pixelumgebungen in dem Trainingsbild und in dem Referenzbild entsprechend der jeweiligen relativen Lage des jeweiligen Herstellungselements in dem Trainingsbild zu der in dem Referenzbild versetzt sind, und das jeweilige Pixel des Trainingsbildes bei einer zweiten Zuordnung in Abhängigkeit von den ermittelten zweiten Übereinstimmungsgraden gemäß einem vorgegebenen zweiten Zuordnungskriterium einem der Herstellungselemente (62, 64) zugeordnet wird, und vorzugsweise die zweiten Pixelumgebungen jeweils mehr Pixel umfassen als die ersten Pixelumgebungen.

7. Verfahren nach Anspruch 6, wobei das erste Elementtemplate für die jeweiligen Herstellungselemente (62, 64) nur diejenigen Pixel enthält, welche bei allen Trainingsbildern dem jeweiligen Herstellungselement (62, 64) bei dem ersten Zuordnen zugeordnet wurden, und
wobei das zweite Elementtemplate für die jeweiligen Herstellungselemente (62, 64) diejenigen Pixel enthält, welche bei wenigstens einem der Trainingsbilder dem jeweiligen Herstellungselement (62, 64) bei dem zweiten Zuordnen zugeordnet wurden.

8. Verfahren nach einem der vorangehenden Ansprüche, wobei beim Erzeugen der Elementtemplates den im ersten Elementtemplate enthaltenen Pixeln erste Elementtemplate--Pixeldaten und den im zweiten Elementtemplate enthaltenen Pixeln zweite Teiltemplate-Pixeldaten zugeordnet werden, wobei die ersten und/oder zweiten Elementtemplate -Pixeldaten
- aus Pixeldaten, die den jeweiligen Pixeln der Trainingsbilder zugeordnet sind, ermittelt werden oder
- den Pixeldaten, die den jeweiligen Pixeln der Trainingsbilder zugeordnet sind, entsprechen.

9. Verfahren nach einem der vorhergehenden Ansprüche, bei dem zum Bereitstellen der Trainingsbilder digitale Bilder mehrerer Trainings-Wertdokumente des vorgegebenen Wertdokumenttyps erfasst werden und/oder zum Bereitstellen des Referenzbildes ein digitales Bild eines Referenz-Wertdokuments des vorgegebenen Wertdokumenttyps erfasst wird.

10. Computerprogramm mit Programmcode-Mitteln, um das Verfahren nach einem der vorhergehenden Ansprüche durchzuführen, wenn das Programm auf einem Computer ausgeführt wird.

11. Computerlesbarer Datenträger mit Programmcode, der von einem Computer ausführbar ist, so dass der Computer ein Verfahren nach einem der vorhergehenden Ansprüche ausführt.

12. Verfahren zum Prüfen von Wertdokumenten (12) eines vorgegebenen Wertdokumenttyps, welche jeweils zwei vorgegebene Herstellungselemente (62, 64), insbesondere Druckschichten und/oder Sicherheitselemente, aufweisen,
unter Verwendung von, insbesondere mittels eines Verfahren nach einem der vorangehenden Ansprüche erzeugten, Elementtemplates für die Herstellungselemente (62, 64), mit den Schritten:
- Bereitstellen eines digitalen Wertdokumentbildes (60, 60T) eines zu prüfenden Wertdokuments (12) des vorgegebenen Wertdokumenttyps , das das Pixel (66) umfasst, denen jeweils Pixeldaten zugeordnet sind,
- für das bereitgestellte Wertdokumentbild Ermitteln einer Lage der Herstellungselemente (62, 64),
- Ermitteln eines Templates für das digitale Wertdokumentbild (60, 60T) unter Verwendung der Elementtemplates für die Herstellungselemente (62, 64) und der ermittelten Lagen der Herstellungselemente (62, 64),
- Prüfen des digitalen Wertdokumentbildes (60, 60T) unter Verwendung des ermittelten Templates,
wobei zur Zuordnung von Pixeln eine vorgegebene Pixelumgebung eines jeweiligen Pixels in dem jeweiligen Trainingsbild mit jeweils einer vorgegebenen Pixelumgebung eines entsprechenden Pixels des Referenzbildes verglichen wird, wobei die Lage eines jeweiligen Herstellungselements berücksichtigt wird, wobei zur Berücksichtigung der Lage für das jeweilige Herstellungselement ein Verschiebungsvektor ermittelt wird, der der Differenz der ermittelten Lage des jeweiligen Herstellungselements in dem Trainingsbild und der Lage des jeweiligen Herstellungselements in dem Referenzbild entspricht.

13. Verfahren nach Anspruch 12, bei dem beim Ermitteln des Templates Pixeln (66) des Templates, die in den entsprechend den ermittelten Lagen der Herstellungselemente (62, 64) verschobenen Elementtemplates vorhanden sind, jeweils Template-Pixeldaten zugeordnet werden, die in Abhängigkeit von Elementtemplate-Pixeldaten von entsprechenden Pixeln (66) von entsprechend den jeweils ermittelten Lagen verschobenen Elementtemplates für die Herstellungselemente (62, 64) ermittelt sind.

14. Verfahren nach Anspruch 12, bei dem für wenigstens eines der Herstellungselemente (62, 64) ein erstes und ein zweites Elementtemplate verwendet wird,
bei dem beim Ermitteln des Templates Pixeln (66) des Templates, die in den entsprechend den ermittelten Lagen der Herstellungselemente (62, 64) verschoben ersten Elementtemplates vorhanden sind, Template-Pixeldaten zugeordnet werden, die unter Verwendung von Elementtemplate-Pixeldaten der jeweiligen Pixel in den entsprechend den ermittelten Lagen der Herstellungselemente (62, 64) verschobenen ersten Elementtemplates ermittelt wurden,
für die verbliebenen Pixel (66), die in wenigstens einem der entsprechend der ermittelten Lagen der Herstellungselemente (62, 64) verschobenen zweiten Elementtemplates vorhanden sind, Template-Pixeldaten unter Verwendung der Elementtemplate-Pixeldaten jeweils entsprechender Pixel (66) des wenigstens einen der entsprechend der ermittelten Lagen der Herstellungselemente (62, 64) verschobenen zweiten Elementtemplates ermittelt werden.

15. Verfahren nach einem der Ansprüche 12 bis 14, bei dem ein Hintergrundtemplate verwendet wird, das Pixel (66) enthält, die in keinem der Elementtemplates für die Herstellungselemente (62, 64) enthalten sind, und
bei dem beim Ermitteln des Templates für das digitale Wertdokumentbild für die verbliebenen Pixel, die in dem Hintergrundtemplate vorhanden sind, jeweils Template-Pixeldaten unter Verwendung der Elementtemplate-Pixeldaten eines jeweils entsprechenden Pixels (66) des Hintergrundtemplates ermittelt werden.

16. Verfahren nach einem der Ansprüche 12 bis 15, bei dem beim Bereitstellen des Wertdokumentbildes mittels einer Bilderfassungseinrichtung (40) ein digitales Wertdokumentbild (60, 60T) eines zu prüfenden Wertdokuments erfasst und in einer Speichereinrichtung (48) gespeichert wird.

17. Verfahren zum Bearbeiten, insbesondere Prüfen und/oder Zählen und/oder Sortieren und/oder Vernichten, von Wertdokumenten (12) eines vorgegebenen Wertdokumenttyps, welche jeweils zwei vorgegebene Herstellungselemente (62, 64), insbesondere Druckschichten und/oder Sicherheitselemente, aufweisen, bei denen Wertdokumente (12) einzeln an einer Bilderfassungseinrichtung zur Erfassung eines digitalen Wertdokumentbildes (60, 60T) vorbeitransportiert werden, während des Vorbeitransports eines jeweiligen Wertdokuments (12) ein digitales Wertdokumentbild (60, 60T) erfasst, und danach, vorzugsweise in Echtzeit, mit einem Verfahren nach einem der Ansprüche 12 bis 16 geprüft wird.

18. Computerprogramm mit Programmcode-Mitteln, um das Verfahren nach einem der Ansprüche 12 bis 17 durchzuführen, wenn das Programm auf einem Computer ausgeführt wird.

19. Computerlesbarer Datenträger mit Programmcode, der von einem Computer ausführbar ist, so dass der Computer ein Verfahren nach einem der Ansprüche 12 bis 17 ausführt.

20. Vorrichtung zum Erzeugen von Elementtemplates zum Bilden von Templates beim Prüfen von Wertdokumenten (12) eines vorgegebenen Wertdokumenttyps, wobei Wertdokumente des vorgegebenen Wertdokumenttyps wenigstens zwei vorgegebene Herstellungselemente (62, 64), insbesondere Druckschichten und/oder Sicherheitselemente, die sich gegebenenfalls teilweise überlappen, aufweisen, mit einer Speichereinrichtung (72) zum Speichern von digitalen Trainingsbildern des vorgegebenen Wertdokumenttyps, eines Referenzbildes eines Referenzwertdokuments des vorgegebenen Wertdokumenttyps und vorzugsweise erzeugten Elementtemplates, wobei die Vorrichtung (70) dazu ausgebildet ist, ein Verfahren nach einem der Ansprüche 1 bis 9 unter Verwendung der Trainingsbilder und des Referenzbildes durchzuführen und vorzugsweise die erzeugten Elementtemplates in der Speichereinrichtung (72) zu speichern.

21. Vorrichtung zum Prüfen von Wertdokumenten (12), insbesondere Banknoten, welche jeweils wenigstens zwei vorgegebene Herstellungselemente (62, 64), insbesondere Druckschichten und/oder Sicherheitselemente, aufweisen, unter Verwendung von, insbesondere in einem Verfahren nach einem der Ansprüche 1 bis 9 erzeugten Elementtemplates für die Herstellungselemente (62, 64), mit:
einer Auswertungseinrichtung (47), welche wenigstens einen Speicher (48), in dem die Elementtemplates gespeichert sind und eine Schnittstelle (44) zum Bereitstellen eines digitalen Wertdokumentbildes (60, 60T) aufweist, wobei die Auswertungseinrichtung (46) dazu eingerichtet ist, eine Verfahren nach einem der Ansprüche 12 bis 17 durchzuführen.

22. Vorrichtung nach Anspruch 21, die weiter eine Bilderfassungseinrichtung (40) zum Erfassen eines digitalen Wertdokumentbildes (60, 60T) eines zu prüfenden Wertdokuments (12) aufweist, die mit der Schnittstelle (44) zum Bereitstellen eines digitalen Wertdokuments (12) über eine Signalverbindung verbunden ist.

23. Vorrichtung zum Bearbeiten, insbesondere Prüfen und/oder Zählen und/oder Sortieren und/oder Vernichten, von Wertdokumenten (12) eines vorgegebenen Wertdokumenttyps insbesondere Banknoten, welche jeweils wenigstens zwei vorgegebene Herstellungselemente (62, 64), insbesondere Druckschichten und/oder Sicherheitselemente, aufweisen, mit einer Zuführeinrichtung (14) zur Zuführung von einzelnen oder vereinzelten zu bearbeitenden Wertdokumenten (12),
einer Ausgabeeinrichtung (16) mit wenigstens einem Ausgabeabschnitt zur Aufnahme bearbeiteter Wertdokumente (12),
einer Transporteinrichtung (18) zum Transportieren von einzelnen oder vereinzelten Wertdokumenten (12) von der Zuführeinrichtung (14) zu der Ausgabeeinrichtung, und
einer Prüfvorrichtung (47,40) nach einem der Ansprüche 21 oder 22, wobei die Bilderfassungseinrichtung (40) der Prüfvorrichtung an dem Transportpfad (36) angeordnet und so eingerichtet sein, dass digitale Wertdokumentbilder (60, 60T) von an der Bilderfassungseinrichtung (40) vorbeitransportierten zu prüfenden Wertdokumenten (12) während des Vorbeitransports erfasst und für die Verwendung in der Prüfvorrichtung (47,40) bereitgestellt werden.

## Claims

1. A method for generating element templates for forming templates when inspecting security documents (12) of a predetermined type, in particular banknotes, wherein security documents (12) of the predetermined type comprise at least two predetermined manufacturing elements (62, 64), in particular printing layers and/or security features, which may partially overlap, and the element templates correspond to the manufacturing elements (62, 64), wherein digital training images (60, 60T) of training security documents of the specified type and a digital reference image of a reference security document of the specified type, each comprising pixels (66) to which pixel data is assigned, are used, comprising the following steps:
- for each of the training images, determining a position of the production elements (62, 64), and
assigning pixels (66) of the respective training image to the production elements (62, 64) using the reference image, wherein, for the assignment of pixels, a given pixel neighbourhood of a respective pixel in the respective training image is compared with a given pixel neighbourhood of a corresponding pixel of the reference image, wherein the position of a respective manufacturing element is taken into account, wherein, to take the position into account for the respective manufacturing element, a displacement vector is determined which corresponds to the difference between the determined position of the respective manufacturing element in the training image and the position of the respective manufacturing element in the reference image ,
- for each of the manufacturing elements (62, 64), generating a first element template containing those pixels (66) that have been assigned to the respective manufacturing element (62, 64) in all training images, and
- for each of the manufacturing elements (62, 64), generating a second element template containing those pixels (66) that were assigned to the respective manufacturing element (62, 64) in one or more of the training images.

2. The method according to claim 1, wherein the training security documents and the reference security document
- comprise, or preferably are, finished and/or freshly printed value documents (12) of the specified value document type, in particular of the same currency and/or denomination.

3. A method according to one of the preceding claims, comprising the further step of:
- generating a background template which contains those pixels that have not been assigned to any of the production elements (62, 64) in any of the training images, and background template pixel data assigned to each of these, which is preferably determined from pixel data assigned to the respective pixels of the training images.

4. A method according to any one of the preceding claims,
wherein, when determining the position of the respective manufacturing elements (62, 64) in a respective one of the training images, the position is determined with respect to the same positional reference system or relative to at least one of the manufacturing elements (62, 64) in a predetermined one of the training images or relative to at least one of the manufacturing elements in the reference image.

5. A method according to one of the preceding claims, wherein, when assigning pixels of the respective training image to the manufacturing elements (62, 64) a degree of correspondence is determined for a respective pixel of the respective training image between a pixel neighbourhood of the pixel and a pixel neighbourhood of a corresponding pixel in the refe , wherein the respective pixel neighbourhoods of the respective pixel in the training image and in the reference image are offset relative to the respective relative position of the respective manufacturing element (62, 64) in the training image are offset relative to that in the reference image, and the respective pixel of the training image is assigned to one of the manufacturing elements in accordance with a predetermined assignment criterion, depending on the determined degrees of match.

6. A method according to any one of claims 1 to 4, wherein, when assigning pixels of the respective training image to the manufacturing elements, a first degree of match between a first pixel neighbourhood of the pixel and a first pixel neighbourhood of a pixel in the reference image is determined for a respective pixel of the respective training image, wherein the first pixel neighbourhoods in the training image and in the reference image are offset relative to one another in accordance with the respective relative position of the respective manufacturing element in the training image to that in the reference image, and the respective pixel of the training image is assigned to one of the manufacturing elements in a first assignment depending on the determined first degrees of match in accordance with a predetermined first assignment criterion, and
for a respective pixel of the respective training image, a second degree of match is determined between a second pixel neighbourhood of the pixel and a second pixel neighbourhood in the reference image, wherein the second pixel neighbourhoods in the training image and in the reference image are offset relative to one another in accordance with the respective relative position of the respective manufacturing element in the training image compared to that in the reference image, and the respective pixel of the training image is assigned to one of the manufacturing elements (62, 64) in a second assignment depending on the determined second degrees of match in accordance with a predetermined second assignment criterion, and preferably the second pixel neighbourhoods each comprise more pixels than the first pixel neighbourhoods.

7. The method according to claim 6, wherein the first element template for the respective manufacturing elements (62, 64) contains only those pixels which, in all training images, were assigned to the respective manufacturing element (62, 64) during the first assignment, and
wherein the second element template for the respective manufacturing elements (62, 64) contains those pixels which, in at least one of the training images, were assigned to the respective manufacturing element (62, 64) during the second assignment.

8. A method according to any one of the preceding claims,
wherein, when generating the element templates, first element template pixel data is assigned to the pixels contained in the first element template, and second sub-template pixel data is assigned to the pixels contained in the second element template, wherein the first and/or second element template pixel data
- are determined from pixel data assigned to the respective pixels of the training images, or
- correspond to the pixel data assigned to the respective pixels of the training images.

9. A method according to one of the preceding claims, in which, to provide the training images, digital images of several training value documents of the specified value document type are captured and/or, to provide the reference image, a digital image of a reference value document of the specified value document type is captured.

10. A computer program comprising program code means for carrying out the method according to one of the preceding claims, when the program is executed on a computer.

11. A computer-readable medium containing program code executable by a computer, such that the computer performs a method according to one of the preceding claims.

12. A method for inspecting security documents (12) of a predetermined type, each of which comprises two predetermined manufacturing elements (62, 64), in particular printing layers and/or security features, using an element template for the manufacturing elements (62, 64), in particular one generated by a method according to one of the preceding claims, comprising the steps of:
- providing a digital security document image (60, 60T) of a security document (12) of the specified type to be examined, which comprises pixels (66) to which pixel data is respectively assigned,
- determining a position of the production elements (62, 64) for the provided security document image,
- determining a template for the digital security document image (60, 60T) using the element templates for the manufacturing elements (62, 64) and the determined positions of the manufacturing elements (62, 64),
- checking the digital security document image (60, 60T) using the determined template,
wherein, for the purpose of assigning pixels, a predetermined pixel neighbourhood of a respective pixel in the respective training image is compared with a respective predetermined pixel neighbourhood of a corresponding pixel of the reference image, wherein the position of a respective production element is taken into account, wherein, to take the position into account for the respective production element, a displacement vector is determined which corresponds to the difference between the determined position of the respective production element in the training image and the position of the respective production element in the reference image.

13. A method according to claim 12, wherein, when determining the template, pixels (66) of the template that are present in the areas corresponding to the determined positions of the manufacturing elements (62, 64) , are each assigned template pixel data which is determined as a function of element template pixel data from corresponding pixels (66) of element templates shifted in accordance with the respective determined positions for the manufacturing elements (62, 64).

14. A method according to claim 12, in which a first and a second element template are used for at least one of the manufacturing elements (62, 64),
in which, when determining the template, pixels (66) of the template that are present in the first element template shifted in accordance with the determined positions of the manufacturing elements (62, 64) are assigned template pixel data which has been determined using element template pixel data of the respective pixels in the first element templates shifted in accordance with the determined positions of the manufacturing elements (62, 64),
for the remaining pixels (66) present in at least one of the second element templates shifted in accordance with the determined positions of the manufacturing elements (62, 64), template pixel data is determined using the element template pixel data of respective corresponding pixels (66) of the at least one of the second element templates shifted in accordance with the determined positions of the manufacturing elements (62, 64).

15. A method according to any one of claims 12 to 14, wherein a background template is used which contains pixels (66) that are not contained in any of the element templates for the production elements (62, 64), and
in which, when determining the template for the digital security document image for the remaining pixels present in the background template ,
template pixel data is determined in each case using the element template pixel data of a respective corresponding pixel (66) of the background template.

16. A method according to any one of claims 12 to 15, wherein, when providing the security document image by means of an image capture device (40), a digital security document image (60, 60T) of a security document to be examined is captured and stored in a storage device (48).

17. A method for processing, in particular checking and/or counting and/or sorting and/or destroying, security documents (12) of a predetermined type, each of which comprises two predetermined manufacturing elements (62, 64), in particular printing layers and/or security elements, in which security documents (12) are transported individually past an image capture device for capturing a digital security document image (60, 60T), a digital security document image (60, 60T) is captured during the passage of a respective security document (12), and is subsequently, preferably in real time, examined using a method according to one of claims 12 to 16.

18. A computer program comprising program code means for carrying out the method according to any one of claims 12 to 17 when the program is executed on a computer.

19. A computer-readable medium containing program code executable by a computer, such that the computer performs a method according to any one of claims 12 to 17.

20. Apparatus for generating element templates for forming templates when verifying security documents (12) of a predetermined security document type, wherein security documents of the predetermined security document type comprise at least two predetermined manufacturing elements (62, 64), in particular printing layers and/or security features, which may partially overlap, comprising a storage device (72) for storing digital training images of the specified type of security document, a reference image of a reference security document of the specified security document type and, preferably, generated element templates, wherein the device (70) is configured to carry out a method according to one of claims 1 to 9 using the training images and the reference image and, preferably, to store the generated element templates in the storage device (72).

21. Apparatus for verifying security documents (12), in particular banknotes, each of which comprises at least two specified manufacturing elements (62, 64), in particular printing layers and/or security features, using element templates for the manufacturing elements (62, 64) generated, in particular, in a method according to any one of claims 1 to 9, comprising: an evaluation device (47) which comprises at least one memory (48) in which the element templates are stored and an interface (44) for providing a digital image (60, 60T) of the security document, wherein the evaluation device (46) is configured to carry out a method according to one of claims 12 to 17.

22. An apparatus according to claim 21, which further comprises an image capture device (40) for capturing a digital security document image (60, 60T) of a security document (12) to be examined, which is connected to the interface (44) via a signal connection for providing a digital security document (12).

23. Apparatus for processing, in particular verifying and/or counting and/or sorting and/or destroying, security documents (12) of a security document type specified by a user ( ), in particular banknotes, each of which comprises at least two specified manufacturing elements (62, 64), in particular printing layers and/or security features, comprising
a feed device (14) for feeding individual or separated security documents (12) to be processed,
an output device (16) with at least one output section for receiving processed security documents (12),
a transport device (18) for transporting individual or separated security documents (12) from the feed device (14) to the output device, and
an inspection device (47, 40) according to one of claims 21 or 22, wherein the image capture device (40) of the inspection device is arranged on the transport path (36) and is configured such that digital images (60, 60T) of the security documents (12) to be checked, as they are transported past the image capture device (40), are captured during this passage and made available for use in the checking device (47, 40).

## Revendications

1. Procédé de génération de modèles d'éléments pour la création de modèles lors du contrôle de documents de valeur (12) d'un type prédéfini, en particulier des billets de banque, les documents de valeur (12) du type prédéfini comportant au moins deux éléments de fabrication prédéfinis (62, 64), notamment des couches d'impression et/ou des éléments de sécurité, qui se chevauchent éventuellement partiellement, et les modèles d'éléments correspondant aux éléments de fabrication (62, 64), des images d'apprentissage numériques (60, 60T) de documents de valeur d'apprentissage du type de document de valeur prédéfini et une image de référence numérique d'un document de valeur de référence du type de document de valeur prédéfini, qui comportent chacune des pixels (66) auxquels sont associées des données de pixels, avec les étapes suivantes :
- pour chacune des images d'apprentissage, déterminer une position des éléments de fabrication (62, 64), et
l'affectation de pixels (66) de l'image d'apprentissage respective aux éléments de fabrication (62, 64) en utilisant l'image de référence, dans laquelle, lors de l'affectation de pixels, un environnement de pixels prédéfini d'un pixel respectif dans l'image d'apprentissage respective est comparé à un environnement de pixels prédéfini d'un pixel correspondant de l'image de référence, la position d'un élément de fabrication respectif étant prise en compte, un vecteur de décalage étant déterminé pour prendre en compte la position de l'élément de fabrication respectif, lequel vecteur correspond à la différence entre la position déterminée de l'élément de fabrication respectif dans l'image d'apprentissage et la position de l'élément de fabrication respectif dans l'image de référence ,
- pour chacun des éléments de fabrication (62, 64), générer un premier modèle d'élément contenant les pixels (66) qui ont été attribués à l'élément de fabrication respectif (62, 64) dans toutes les images d'apprentissage, et
- pour chacun des éléments de fabrication (62, 64), générer un deuxième modèle d'élément contenant les pixels (66) qui ont été associés à l'élément de fabrication correspondant (62, 64) dans une ou plusieurs des images d'apprentissage.

2. Procédé selon la revendication 1, dans lequel les documents de valeur d'apprentissage et le document de valeur de référence
- comprennent ou sont de préférence des documents de valeur (12) finis et/ou fraîchement imprimés du type de document de valeur prédéfini, en particulier de même devise et/ou de même dénomination.

3. Procédé selon l'une des revendications précédentes, comprenant l'étape supplémentaire consistant à :
- la génération d'un modèle d'arrière-plan qui contient les pixels qui n'ont été attribués à aucun des éléments de fabrication (62, 64) dans aucune des images d'apprentissage, ainsi que les données de pixels du modèle d'arrière-plan qui leur sont respectivement attribuées, lesquelles sont de préférence déterminées à partir des données de pixels attribuées aux pixels respectifs des images d'apprentissage.

4. Procédé selon l'une des revendications précédentes, dans lequel, lors de la détermination de la position des éléments de fabrication respectifs (62, 64) dans l'une des images d'apprentissage, la position est déterminée par rapport au même système de référence de position ou par rapport à au moins l'un des éléments de fabrication (62, 64) dans une image d'apprentissage prédéfinie ou par rapport à au moins l'un des éléments de fabrication dans l'image de référence.

5. Procédé selon l'une des revendications précédentes, dans lequel, lors de l'affectation de pixels de l'image d'apprentissage respective aux éléments de fabrication (62, 64), on détermine, pour un pixel respectif de l'image d'apprentissage respective, un degré de correspondance entre un voisinage de ce pixel et un voisinage d'un pixel correspondant dans l'image de réfé , les voisinages respectifs du pixel respectif dans l'image d'apprentissage et dans l'image de référence étant décalés en fonction de la position relative respective de l'élément de fabrication respectif (62, 64) dans l'image d'apprentissage par rapport à celle de l'image de référence, et le pixel correspondant de l'image d'apprentissage est attribué à l'un des éléments de fabrication en fonction des degrés de correspondance déterminés, selon un critère d'attribution prédéfini.

6. Procédé selon l'une des revendications 1 à 4, dans lequel, lors de l'attribution de pixels de l'image d'apprentissage correspondante aux éléments de fabrication, on détermine, pour un pixel donné de l'image d'apprentissage, un premier degré de correspondance entre un premier voisinage de ce pixel et un premier voisinage d'un pixel de l'image de référence, les premiers environnements de pixels dans l'image d'apprentissage et dans l'image de référence étant décalés l'un par rapport à l'autre en fonction de la position relative respective de l'élément de fabrication correspondant dans l'image d'apprentissage par rapport à celle dans l'image de référence, et le pixel correspondant de l'image d'apprentissage étant attribué, lors d'une première attribution, à l'un des éléments de fabrication en fonction des premiers degrés de correspondance déterminés selon un premier critère d'attribution prédéfini, et
pour un pixel respectif de l'image d'apprentissage respective, un deuxième degré de correspondance est déterminé entre un deuxième voisinage de pixels dudit pixel et un deuxième voisinage de pixels dans l'image de référence, les deuxièmes voisinages de pixels dans l'image d'apprentissage et dans l'image de référence étant décalés l'un par rapport à l'autre en fonction de la position relative respective de l'élément de fabrication correspondant dans l'image d'apprentissage par rapport à celle dans l'image de référence, et le pixel correspondant de l'image d'apprentissage est attribué, lors d'une deuxième attribution, à l'un des éléments de fabrication (62, 64) en fonction des deuxièmes degrés de correspondance déterminés, conformément à un deuxième critère d'attribution prédéfini, et de préférence, les deuxièmes environnements de pixels comprennent chacun plus de pixels que les premiers environnements de pixels.

7. Procédé selon la revendication 6, dans lequel le premier modèle d'élément pour les éléments de fabrication respectifs (62, 64) ne contient que les pixels qui, pour toutes les images d'apprentissage, ont été attribués à l'élément de fabrication respectif (62, 64) lors de la première attribution, et
et dans lequel le deuxième modèle d'élément pour les éléments de fabrication respectifs (62, 64) contient les pixels qui, dans au moins l'une des images d'apprentissage, ont été attribués à l'élément de fabrication respectif (62, 64) lors de la deuxième attribution.

8. Procédé selon l'une des revendications précédentes, dans lequel, lors de la génération des modèles d'éléments, des premières données de pixels de modèle d'élément sont attribuées aux pixels contenus dans le premier modèle d'élément et des deuxièmes données de pixels de modèle d'élément sont attribuées aux pixels contenus dans le deuxième modèle d'élément, les premières et/ou deuxièmes données de pixels de modèle d'élément
- sont déterminées à partir de données de pixels attribuées aux pixels respectifs des images d'apprentissage, ou
- correspondent aux données de pixels attribuées aux pixels respectifs des images d'apprentissage.

9. Procédé selon l'une des revendications précédentes, dans lequel, pour fournir les images d'apprentissage, des images numériques de plusieurs documents de valeur d'apprentissage du type de document de valeur prédéfini sont capturées et/ou, pour fournir l'image de référence, une image numérique d'un document de valeur de référence du type de document de valeur prédéfini est capturée.

10. Programme informatique comprenant des moyens de code de programme pour mettre en œuvre le procédé selon l'une des revendications précédentes, lorsque le programme est exécuté sur un ordinateur.

11. Support de données lisible par ordinateur contenant un code de programme exécutable par un ordinateur, de sorte que l'ordinateur exécute un procédé selon l'une des revendications précédentes.

12. Procédé de contrôle de documents de valeur (12) d'un type de document de valeur prédéfini, qui comportent chacun deux éléments de fabrication prédéfinis (62, 64), en particulier des couches d'impression et/ou des éléments de sécurité,
en utilisant, notamment au moyen d'un procédé selon l'une des revendications précédentes, des modèles d'éléments pour les éléments de fabrication (62, 64), comprenant les étapes suivantes :
- fourniture d'une image numérique (60, 60T) d'un document de valeur (12) à contrôler, du type de document de valeur prédéfini, qui comprend les pixels (66) auxquels sont respectivement associées des données de pixels,
- pour l'image de document de valeur fournie, déterminer une position des éléments de fabrication (62, 64),
- déterminer un modèle pour l'image numérique du document de valeur (60, 60T) en utilisant les modèles d'éléments pour les éléments de fabrication (62, 64) et les positions déterminées des éléments de fabrication (62, 64),
- vérifier l'image numérique du document de valeur (60, 60T) en utilisant le modèle déterminé,
dans lequel, pour l'affectation des pixels, un voisinage de pixels prédéfini d'un pixel respectif dans l'image d'apprentissage respective est comparé à un voisinage de pixels prédéfini d'un pixel correspondant de l'image de référence, la position d'un élément de fabrication respectif étant prise en compte, un vecteur de décalage étant déterminé pour prendre en compte la position de l'élément de fabrication respectif, lequel vecteur correspond à la différence entre la position déterminée de l'élément de fabrication respectif dans l'image d'apprentissage et la position de l'élément de fabrication respectif dans l'image de référence.

13. Procédé selon la revendication 12, dans lequel, lors de la détermination du modèle, des pixels (66) du modèle qui se trouvent dans les zones correspondant aux positions déterminées des éléments de fabrication (62, 64) , des données de pixels de gabarit sont respectivement attribuées, lesquelles sont déterminées en fonction de données de pixels de gabarit d'éléments correspondant aux pixels (66) des gabarits d'éléments décalés selon les positions respectives déterminées pour les éléments de fabrication (62, 64).

14. Procédé selon la revendication 12, dans lequel, pour au moins l'un des éléments de fabrication (62, 64), on utilise un premier et un deuxième gabarit d'élément,
dans lequel, lors de la détermination du modèle, des pixels (66) du modèle qui sont présents dans le premier modèle d'élément décalé en fonction des positions déterminées des éléments de fabrication (62, 64) sont associées des données de pixels de gabarit qui ont été déterminées à l'aide de données de pixels de gabarit d'éléments des pixels respectifs dans les premiers gabarits d'éléments décalés en fonction des positions déterminées des éléments de fabrication (62, 64),
pour les pixels restants (66) présents dans au moins l'un des deuxièmes modèles d'éléments décalés en fonction des positions déterminées des éléments de fabrication (62, 64), des données de pixels de gabarit sont déterminées en utilisant les données de pixels de gabarit d'éléments des pixels respectifs (66) d'au moins l'un des seconds gabarits d'éléments décalés en fonction des positions déterminées des éléments de fabrication (62, 64).

15. Procédé selon l'une des revendications 12 à 14, dans lequel on utilise un modèle d'arrière-plan qui contient des pixels (66) qui ne sont contenus dans aucun des modèles d'éléments pour les éléments de fabrication (62, 64), et
dans lequel, lors de la détermination du modèle pour l'image numérique du document de valeur pour les pixels restants qui sont présents dans le modèle d'arrière-plan , des données de pixels de modèle sont déterminées pour chacun d'entre eux en utilisant les données de pixels du modèle d'élément d'un pixel (66) correspondant du modèle d'arrière-plan.

16. Procédé selon l'une des revendications 12 à 15, dans lequel, lors de la mise à disposition de l'image du document de valeur au moyen d'un dispositif de capture d'images (40), une image numérique (60, 60T) d'un document de valeur à vérifier est capturée et stockée dans un dispositif de mémoire (48).

17. Procédé de traitement, en particulier de contrôle et/ou de comptage et/ou de tri et/ou de destruction, de documents de valeur (12) d'un type prédéfini, qui comportent chacun deux éléments de fabrication prédéfinis (62, 64), notamment des couches d'impression et/ou des éléments de sécurité, dans lequel les documents de valeur (12) sont acheminés individuellement devant un dispositif de capture d'image destiné à capturer une image numérique du document de valeur (60, 60T), une image numérique du document de valeur (60, 60T) est capturée pendant le passage d'un document de valeur (12) respectif, puis celui-ci est contrôlé, de préférence en temps réel, à l'aide d'un procédé selon l'une des revendications 12 à 16.

18. Programme informatique comprenant des moyens de code de programme pour mettre en œuvre le procédé selon l'une des revendications 12 à 17 lorsque le programme est exécuté sur un ordinateur.

19. Support de données lisible par ordinateur contenant un code de programme exécutable par un ordinateur, de sorte que l'ordinateur exécute un procédé selon l'une des revendications 12 à 17.

20. Dispositif pour générer des modèles d'éléments afin de former des modèles lors de la vérification de documents de valeur (12) d'un type de document de valeur prédéfini, les documents de valeur du type de document de valeur prédéfini comportant au moins deux éléments de fabrication prédéfinis (62, 64), notamment des couches d'impression et/ou des éléments de sécurité, qui se chevauchent éventuellement partiellement, comprenant un dispositif de stockage (72) destiné à stocker des images d'apprentissage numériques du type de document de valeur prédéfini, d'une image de référence d'un document de valeur de référence du type de document de valeur prédéfini et, de préférence, de modèles d'éléments générés, le dispositif (70) étant conçu pour mettre en œuvre un procédé selon l'une des revendications 1 à 9 en utilisant les images d'apprentissage et l'image de référence et, de préférence, pour stocker les modèles d'éléments générés dans le dispositif de stockage (72).

21. Dispositif pour contrôler des documents de valeur (12), en particulier des billets de banque, qui comportent chacun au moins deux éléments de fabrication prédéfinis (62, 64), en particulier des couches d'impression et/ou des éléments de sécurité, en utilisant des modèles d'éléments générés, en particulier selon un procédé selon l'une des revendications 1 à 9, pour les éléments de fabrication (62, 64), comprenant :
un dispositif d'évaluation (47) qui comporte au moins une mémoire (48) dans laquelle sont stockés les modèles d'éléments et une interface (44) pour fournir une image numérique du document de valeur (60, 60T), le dispositif d'évaluation (46) étant agencé pour exécuter un procédé selon l'une des revendications 12 à 17.

22. Dispositif selon la revendication 21, qui comprend en outre un dispositif de capture d'images (40) destiné à capturer une image numérique (60, 60T) d'un document de valeur (12) à vérifier, lequel dispositif est relié à l'interface (44) par une liaison de signal afin de fournir un document de valeur (12) numérique.

23. Dispositif destiné au traitement, en particulier au contrôle et/ou au comptage et/ou au tri et/ou à la destruction, de documents de valeur (12) d'un type de document de valeur prédéfini ( ), en particulier des billets de banque, qui comportent chacun au moins deux éléments de fabrication prédéfinis (62, 64), en particulier des couches d'impression et/ou des éléments de sécurité, comprenant
un dispositif d'alimentation (14) pour l'alimentation de documents de valeur (12) individuels ou séparés à traiter,
un dispositif de sortie (16) comportant au moins une section de sortie destinée à recevoir les documents de valeur (12) traités,
un dispositif de transport (18) destiné à transporter des documents de valeur (12) individuels ou séparés du dispositif d'alimentation (14) vers le dispositif de sortie, et
un dispositif de contrôle (47, 40) selon l'une des revendications 21 ou 22, le dispositif de capture d'images (40) du dispositif de contrôle étant disposé sur le chemin de transport (36) et agencé de telle sorte que des images numériques de documents de valeur (60, 60T) des documents de valeur (12) à contrôler, transportés devant le dispositif de capture d'images (40), soient capturées pendant leur passage et mises à disposition pour être utilisées dans le dispositif de contrôle (47, 40).
